# EUROPEAN PATENT SPECIFICATION

(11) **EP 4 479 852 B1**
(45) Date of publication and mention of the grant of the patent: **14.01.2026**
(21) Application number: 23704350.0
(22) Date of filing: 15.02.2023
(51) Int. Cl.: G06F 16/23

(54) **METHOD AND SYSTEM FOR ONLINE DATA FRAGMENT MOVEMENT**
VERFAHREN UND SYSTEM FÜR ONLINE-DATENPARTITIONSBEWEGUNG
PROCÉDÉ ET SYSTÈME DE DÉPLACEMENT DE PARTITION DE DONNÉES EN LIGNE

(30) Priority: 16.02.2022 EP 22382126
(43) Date of publication of application: 25.12.2024
(73) Proprietor: Leanxcale, S.L., 28223 Pozuelo de Alarcón - Madrid (ES)
(72) Inventor: JIMÉNEZ PERIS, Ricardo, 28223 Pozuelo de Alarcón - Madrid (ES); BALLESTEROS CÁMARA, Francisco José, 28223 Pozuelo de Alarcón - Madrid (ES)
(74) Representative: ABG Intellectual Property Law, S.L.
(86) International application number: PCT/EP2023/053695
(87) International publication number: WO 2023/156421

(56) References cited:
- WO-A1-2022/029236
- US-A1- 2015 254 240
- AARON J ELMORE ET AL: "Zephyr", PROCEEDINGS OF THE 2011 ACM SIGMOD INTERNATIONAL CONFERENCE ON MANAGEMENT OF DATA; JUNE 12-16, 2011; ATHENS, GREECE, ACM, NEW YORK, NY, USA, 12 June 2011 (2011-06-12), pages 301 - 312, XP058003141, ISBN: 978-1-4503-0661-4, DOI: 10.1145/1989323.1989356
- SUDIPTO DAS ET AL: "ElasTraS", ACM TRANSACTIONS ON DATABASE SYSTEMS, ACM, NEW YORK, NY, US, vol. 38, no. 1, 26 April 2013 (2013-04-26), pages 1 - 45, XP058014905, ISSN: 0362-5915, DOI: HTTP://DX.DOI.ORG/10.1145/2445583.2445588
- NASSERI MAHNAZ ET AL: "Concurrency control methods in distributed database: A review and comparison", 2017 INTERNATIONAL CONFERENCE ON COMPUTER, COMMUNICATIONS AND ELECTRONICS (COMPTELIX), IEEE, July 2017 (2017-07-01), pages 200 - 205, XP033139210, DOI: 10.1109/COMPTELIX.2017.8003964

## Description

### TECHNICAL FIELD OF THE INVENTION

The present invention refers to the field of transactional data management. The invention provides a method and a transactional distributed database system directed to move data fragments in a distributed transactional database from one data server into another. More particularly, the movement of fragments of data is performed while the transactional distributed database is online and processing read and write operations within transactions that can be changing any data including the data fragment being moved.

### BACKGROUND OF THE INVENTION

Distributed transactional databases with shared nothing architectures are quite static. They are configured for a particular number of nodes and this number remains constant while they are operating. The main reason behind this is that it was unknown how to move data preserving its transactional consistency, while ongoing transactions could modify these data being moved, and, at the same time, not substantially degrading the performance of the system.

The main difficulty is that, when a fragment of data is being moved and it is being modified, said modifications can happen before, during and after the data movement. Modifications that occur before the data are moved are easy to handle since data will be moved from one data server to the other with said modifications applied. However, modifications that occur while the data are being moved and shortly after the data have been moved are hard to deal with.

Another major difficulty, as mentioned before, is how to move a data fragment without hampering the performance of the distributed database, especially of the transactions accessing the data fragment being moved. A simple way to move the data lies in simply stopping the processing ongoing on the data fragment, move it and resume the processing on it (e.g., blocking the transactions that try to access the data fragment while it is being moved). This approach, however, results in the unavailability of the data for changes during the data fragment movement. Also, the fragment can be moved with a process that highly disrupts the processing ongoing on the data, thus degrading the quality of service and, ultimately, resulting in a loss of availability during data movement due to the degraded performance over the data fragment.

Document "Zephyr" (PROCEEDINGS OF THE 2011 ACM SIGMOD INTERNATIONAL CONFERENCE ON MANAGEMENT OF DATA; JUNE 12-16, 2011; ATHENS, GREECE, ACM, NEW YORK, NY, USA, 12 June 2011 (2011-06-12), pages 301-312, DOI: 10.1145/1989323.1989356ISBN: 978-1-4503-0661-4) introduces a technique for live database migration in a shared-nothing architecture using on-demand pull and asynchronous push, ensuring ACID compliance, minimizing downtime, and providing a low overhead with minimal impact on transaction latency and operations during migration.

Document "ElasTraS"(ACM TRANSACTIONS ON DATABASE SYSTEMS, ACM, NEW YORK, NY, US, vol. 38, no. 1, 26 April 2013 (2013-04-26), pages 1-45, ISSN: 0362-5915, DOI: HTTP:// DX.DOI.ORG/10.1145/2445583.2445588) describes ElasTraS, a multitenant DBMS designed for transaction that supports low-latency ACID transactions, is fault-tolerant, self-managing, and highly available. It uses Albatross, an on-demand live migration technique, for elastic load balancing, adapting to changing workloads and minimizing costs while ensuring strong performance.

Document WO 2022/029236 A1 presents a database system that manages value and operation rows with semantic concurrency control, and that is applying stored operations to value rows when trigger conditions are met.

Document US 2015/254240 A1 describes a method for transporting databases between database systems, involves generating a copy of pluggable database hosted on a source database management system at a destination database management system and permitting initiation of transactions.

Document "Concurrency control methods in distributed database: A review and comparison" (2017 INTERNATIONAL CONFERENCE ON COMPUTER, COMMUNICATIONS AND ELECTRONICS (COMPTELIX), IEEE, July 2017 (2017-07), pages 200-205, DOI: 10.1109/COMPTELIX.2017.8003964) introduces and compares several available methods and algorithms for concurrency control in distributed database systems.

Therefore, there is a need for a method and a transactional distributed database system to move data fragments in a distributed database that guarantees transactional consistency. The proposed method works with database systems that rely on multi version concurrency control and preserves as transactional isolation level snapshot isolation, and that ensures that its own performance remains unaffected.

### SUMMARY OF THE INVENTION

The present invention provides an alternative solution for the aforementioned problems, by a method to perform data fragment movement operations in a transactional distributed database according to claim 1 and a transactional distributed database system according to claim 11. In dependent claims, preferred embodiments of the invention are defined. The transactional distributed database system manages a database that is a collection of units such as relational tables, key-value tables, document collections of semi-structured documents written in a language such as JSON or XML, etc. Without loss of generality, we will refer to them as tables that are basically collections of rows. Rows are identified by a primary key and optionally has an arbitrary associated value. The associated value can be just any string of bytes, or a set of columns, or a semi-structured document written in JSON or XML, etc.

The rows are labeled with a commit timestamp that is used to provide the transactional isolation in multi version concurrency control. When transactions are started, they are assigned a start timestamp that determines which snapshot of the database should be observed. If the transaction contains row change operations, then at commit time it will be associated a commit timestamp that will be used to label all the row changes. Rows are not updated in place, but instead new versions of them are created. If a row is deleted, a special tombstone version of the row is created that contains the primary key and the commit timestamp. The versions are differentiated by the commit timestamp. A read operation will always read the row version that has the highest commit timestamp that is lower or equal that the transaction start timestamp.

These tables are split into fragments that we call data fragments. Each data fragment has an identifier and stores a subset of the table rows. Tables can be split into fragments using different policies, for instance, using ranges of primary keys. The transactional distributed database system keeps an inventory of the set of tables, into which data fragments are split.

The transactional distributed database system comprises at least a transactional manager and a distributed data manager. It can contain other typical components such as a query engine. The data manager is in charge of processing read and write operations over the rows of the tables as well as operations at the table level such as creation of tables, reconfiguring the tables and deleting the tables. The write operations over the rows can be of different kinds such as insert, update, and delete. We refer to these write operations as row changes. The write operations are executed over particular set of rows of a table that will be spread among one or more data servers. One particular, data fragment will be stored at a particular data server. These data are also stored in the inventory of the database that contains the list of the data servers together with their identifiers and the list of data fragments that each data server is storing.

The invention describes how a command moves a data fragment from a data server to another data server without stopping the operations, that is, while the read and write operations requested by the applications using the transactional distributed database are executed as well as operations over the tables. Depending on the architecture of the transactional database system, the read and write operations sent to the distributed data manager can be sent from another component, such as a query engine, or directly from the application. We refer to client sides the places from which these read and write operations are issued. The client sides are also registered in the inventory and they are configured to send the read and write operations to the data servers that contain the data to be accessed stored in data fragments.

A data movement command comprises three parameters, the identifier of the data fragment to be moved, the identifier of the data server storing currently the data fragment that we term source data server of this data movement command, and the identifier of the data server that will contain the new copy of the data fragment to be moved, that we call destination data server. During the data movement operation, the data fragment will coexist at both the source and the destination data servers. When the data movement operation is completed the data fragment will be stored only at the destination data server and it will process all read and write operations over this data fragment. During the data movement operation the client sides are reconfigured multiple times to send read and/or write operations over the data fragment being moved to the source and/or destination data servers.

In a first inventive aspect, the invention provides *a computer implemented method* to *perform at least one data fragment movement operation in a transactional distributed database system adapted to interact with at least one client side,*
*wherein said transactional distributed database system comprises at least a transactional manager and a distributed data manager, the distributed data manager comprising at least two data servers; and wherein the distributed data manager is adapted to:*
   ∘ *receive data fragment movement operation commands to move data fragments, wherein each data fragment movement operation command comprises a data fragment identifier, an identifier of the source data server from which the data fragment will be moved and an identifier of the destination data server to which the data fragment will be moved;*
   ∘ *upon receiving a data fragment movement operation command, identify the data fragment to be moved according to the data fragment identifier, and the source data server and the destination data server according to the identifier of the source data server and the identifier of the destination data server;*
   ∘ *execute the command of the movement of the data fragment from the source data server to the destination data server using a data buffer upon receiving the data fragment movement operation command;*
*wherein the data fragment comprises at least one row, each row being uniquely identified by a primary key; and each row comprising the primary key, a commit timestamp, and optionally at least one associated value; and*
*wherein the method comprises the following steps:*
   *a) receiving, the distributed data manager,* a *data fragment movement operation command comprising a data fragment identifier and an identifier of the source data server from which the data fragment will be moved and an identifier of the destination data fragment to which the data fragment will be moved;*
   *b) configuring, by the distributed data manager, the destination data server to store, in a data buffer, one or more row changes for the at least one row of the data fragment to be moved, said one or more row changes being received from at least one client side; wherein each row change among all the row changes is identified by a primary key and has associated a commit timestamp;*
   *c) further configuring, by the distributed data manager, the destination data server to create therein a destination data fragment with the* same *identifier* as *the identifier of the data fragment;*
   *d) configuring, by the distributed data manager, all the at least one client side to allow said all at least one client side to send the one or more row changes for the at least one row of the data fragment to be moved to both the source data server and the destination data server;*
   *e) performing, by the source data server, the following substeps:* - *generating, for each row change, a new version of the row according to the row change; wherein the new version of the row comprises the same primary key* as *the primary key that identifies the row change and wherein the commit timestamp of the new version of the row is the commit timestamp associated with the row change, and*
      - *adding the new version of the row to the data fragment to be moved;*
   *f) configuring the source data server to send all the at least one row of the data fragment to be moved to the at least one destination data server;*
   *g) once all the at least one row of the data fragment has been moved to the destination server, sequentially processing, by the destination server, the one or more row changes stored in the data buffer to:*
      - *check, for each row change, if there is a row in a destination data fragment of the destination data server comprising a primary key and a commit timestamp that are equal to the primary key that identifies the row change and the commit timestamp associated to the row change;*
      - *if so, discard the row change stored in the data buffer; or*
      - *otherwise:*
         *generate a new version of the row according to the row change, wherein the new version of the row comprises the same primary key* as *the primary key associated with the row change and wherein the commit timestamp of the new version of the row is the commit timestamp associated with the row change, and*
         *add the new version of the row to the destination data fragment;*
   *h) concurrently to step g), configuring, by the distributed data manager, the destination data server to store at least one new row change for the at least one row of the data fragment to be moved in the data buffer, if any;*
   *i) once all row changes have been processed by the destination data server and the data buffer is empty, sequentially performing, by the distributed data manager, the following steps:*
      - *configuring the destination data server to*
         *generate, for each further row change for the at least one row of the data fragment to be moved received from at least one client side, a new version of the row according to the further row change, wherein the new version of the* row *has the same primary key* as *the primary key associated with the further row change and wherein the commit timestamp of the new version of the row is the commit timestamp associated with the further row change, and*
         *add the new version of the row to the destination data fragment;*
      - *configuring all the at least one client side to send read operations for the data fragment identified by the identifier comprised in the data fragment movement command, only to the destination data server;*
      - *once the previous step has been completed, configuring all the at least one client side to send the one or more further row changes for the at least one row of the data fragment identified by the identifier comprised in the data fragment movement command; and*
      - *once the previous step has been completed, removing, from the source data server, the data fragment moved to the destination data server.*

The computer implemented method according to the first inventive aspect is directed to perform one or more data fragment movement operations in a transactional distributed database.

The transactional distributed database system of the invention is based on multi version concurrency control (MVCC), which is characterized by doing changes (updates, creations, deletions) on different versions of the rows. The requirements with regard the transactional distributed database system are:
1) Each row change received by a data server (from a client side) leads to a generation of a new version of the row that is identified by the primary key of the row being changed and is associated with a commit timestamp (CTS) of the transaction doing the row change at commit time.
2) Row changes for the same primary key are received with CTS that is monotonically increasing. That is, when for a given primary key a row change is received with a CTS, any later row change will have a CTS higher than all previous row changes received for that primary key.
3) Said commit timestamp is different for different transactions and determines the relative ordering of the versions being generated; that is, the version with a lower commit timestamp is earlier than the version with a higher commit timestamp.
4) Read operations provide a read timestamp that characterizes the database snapshot from which they have to read. That is, the read operation will return for each read row the highest version (the row with the highest commit timestamp) that has a commit timestamp equal or lower than the provided read timestamp.
5) Write operations generate private versions that only become readable for other transactions once the transaction has been committed according to the previous rule.
6) When a data server receives a read operation with a read timestamp, RTS, it is guaranteed that all updates with CTS equal or lower than RTS has been written to the storage previously.
7) Aborted transactions simply discard the private versions.

This particular transactional distributed database system of the invention is adapted to interact and communicate with at least one client side, which will be understood as any server able read, delete, or to perform a change in the data stored in the distributed database of the transactional distributed database system.

Throughout all this document, "transactional distributed database" will be understood as a database in which data are stored across different locations, for instance, in a plurality of different computers that share no physical components, in an organized network server, in decentralized independent computers on the Internet or in the cloud, on corporate intranets or extranets, etc. The distributed database has transactional guarantees that guarantee the so-called ACID properties: Atomicity, Consistency, Isolation, and Durability by means of a transactional manager.

The transactional distributed database comprises a "transactional manager" and a "distributed data manager", which in turn comprises at least two data servers conforming the distributed database.

The distributed data manager allows to store and manage the data by means of inserting, updating, and deleting data from the database. It also allows moving data (e.g., data fragments) from one data server to another. During the movement of data, it continues to process the operations over the data without disruption, that is, it still allows to insert, delete, or update rows that are stored in the data fragments held in the data servers. In this way, when the distributed data manager is in use, the data fragment movement operation is transparent and it does not affect to the undergoing database operations. To achieve this, the transactional manager and the distributed data manager cooperate to keep data up to date and consistent across different data servers of the transactional distributed database system. Besides, the distributed data manager knows the total size of the data fragment to be moved and it is adapted to verify if the data server to which data will be moved counts on free space to receive and store the data fragment as well as to buffer the change operations until the movement operation is completed.

The distributed data manager is adapted to receive data fragment movement operation commands to move data fragments, which are identified with data fragment identifiers, between two of the data servers.

In particular, the command triggers the data movement operation between the two servers. It comprises a data fragment identifier, which identifies the data fragment being moved as mentioned before; and two further identifiers: an identifier of the source data server and an identifier of the destination data server. In this way, the distributed data manager is adapted to identify, upon receiving a data fragment movement operation command, the data fragment to be moved according to the data fragment identifier, and to identify the source data server and the destination data server according to the identifier of the source data server and the identifier of the destination data server.

Throughout all this document, for a particular data movement command, "source data server" will be understood as the data server of the distributed data manager from which the data fragment is being moved and "destination data server" will be understood as the data server of the distributed data manager to which the data will be moved.

The transactional distributed database system will handle at least a collection of data that we will term database. The database data can be structured in smaller units, for instance, tables (or document collections) and any auxiliary data structures such as indexes, heaps, dictionaries, etc. Each of these units (e.g. tables) can be further split into smaller units called data fragments.

Throughout all this document, the terms "data fragment" will be understood as a fraction of the data of the database or as a portion of a data collection, typically although not necessarily, a fraction of the units composing the database, such as tables.

The "data fragment to be moved" or "data fragment being moved" is the data initially stored in the source data server that is going to be moved, while the "destination data fragment" refers to a data fragment created by the destination data server therein in which the data will be moved. The source data server is responsible for the data fragment being moved into the destination data server and the destination data server become responsible of the data fragment once it has been moved. The data fragment identifier comprised in the data fragment movement command identifies both the data fragment being moved and the destination data fragment.

This data fragment or fragment constitutes the unit of distribution since it will reside on one data manager and all operations over it will be handled by the data manager on which it resides. The data fragment stores basic units of information that we call in this document rows and are characterized because they have a unique identifier called primary key that enables to identify such a row among all others. However, the row can be very simple such as a key value pair, primary key and one associated value, or can be a relational tuple comprising a set of columns with a subset in a particular order constituting the primary key or even a JSON or XML document where a set of fields in a particular order constitute the primary key. We refer to the information stored in the row as primary key and columns, and the columns means any value associated to the primary key as for instance an arbitrary value, or a set of relational columns, or a JSON or XML document or any other sort of information.

The data managers of the distributed data manager store data fragments or fragments and perform operations to read and change the information stored in these data fragments, wherein each row of the data fragment is uniquely identified by a primary key, as mentioned before. Throughout all this document, "primary key" will be understood as the information that uniquely identifies a row of the data stored in data fragments; for example, by means of an integer number, or a string of characters or a combination of integer numbers and/or string of characters, or a JSON or XML field, etc.

An example of a data fragment identifier comprised in a data fragment movement operation command can be the range of primary keys of the rows conforming said data fragment.

Each stored row in a data fragment comprises said primary key, the associated information to the primary key termed columns (if any) and, additionally, a commit timestamp. A commit timestamp is a label that has an order defined over it, for instance, an integer. Each transaction, when commits, associates a commit timestamp to all the row changes it has performed.

The distributed data managers are accessed from other servers that have the client sides of the data managers, that is, the part that invokes the data managers. These client sides can be a query engine node, or could be even an API that is collocated with the actual application using the database. In any case, as client sides should be understood any servers that can invoke the data managers to perform operations to read, update or delete the data stored in them.

Upon receiving the data fragment movement operation command, the distributed data manager is adapted to execute the command of the movement of the data fragment from the source data server to the destination data server using a data buffer. As data buffer will be understood an auxiliary data structure configured to store data temporally, which can be accessed by the destination data server of the distributed data manager to store data in and retrieve data from it. The data buffer can be kept in any kind of memory or storage such as the main memory of the server and/or persistent storage directly attached or accessible through a network or any other means.

To perform the at least one data fragment movement operation, the method comprises the following steps:
Firstly, the distributed data manager receives a data fragment movement operation command, the command comprising an identifier of the data fragment to unequivocally indicate the data fragment to be moved. That allows to know the set of rows to be moved, the ones stored in the data fragment. Besides, the command comprises an identifier of the source data server from which the data fragment will be moved and an identifier of the destination data server to which the data fragment will be moved. Thanks to these identifiers, the distributed data manager is able to identify the data fragment and both the source and destination data servers upon receiving a data fragment movement operation command.

Said data fragment movement operation command can be issued, among other reasons, to balance the load between servers or to move the load away from the source server in case it is decommissioned.

In this point, the process continues configuring, by the distributed data manager, the transactional distributed database system to be prepared for the data fragment movement.

The distributed data manager configures the destination data server to store in a data buffer one or more row changes for the at least one row of the data fragment, said one or more row changes being received from the at least one client side. These data changes will be stored in the data buffer temporally by the destination data server until the movement command is fully completed.

Additionally, the distributed data manager configures the destination data server to create in the same a destination data fragment. Said destination data fragment has the same identifier as the identifier of the data fragment; that is, the one comprised in the data fragment movement operation command.

Furthermore, the distributed data manager configures all the client sides, so that they can send the all row change operations over the data stored in the data fragment to both the source data server and the destination data server. According to the configuration of the destination data server mentioned before, said destination data server will store the one or more changes that it receives in a data buffer until the data movement operation is fully completed.

Each row change sent by a client side to both servers is associated with a primary key; in particular, with the primary key of the row being changed. Additionally, the row change has associated a commit timestamp. Thus, when it is stated "commit timestamp associated with the change", it will be understood that there is a correspondence between said commit timestamp and the row change operation.

Each row being moved can be changed multiple times during the movement process by requests made from the client sides. Some changes can happen before the row is moved and some others after the row has been moved. Said row changes are sent by the client sides to the data servers tagged with the commit timestamp of the transaction performing them. Then, each change of a row is uniquely identified by the combination of the primary key above mentioned and its particular commit timestamp.

This step aims that both servers are aware of the changes sent to the transactional distributed database system by one or more client sides, avoiding in this way that any of said changes to be lost or repeated before, during and after the data fragment movement. Change operations can be insertion of rows, updates of rows and deletion of rows as well of other bigger units such as creation and deletion of tables, etc. Throughout this document, synonyms of "change" are "modifications" and "write operations".

Besides, the source data server continues to execute operations over the data that it stores, as it was doing before starting the data movement command.

In particular, the source data server applies the changes to the rows of the data fragment being moved; that is, if the source data server receives row changes from a client side, the source data server generates, for each row change, a new version of the row according to the row change; for example, an update of the information stored in the row. For instance, if the row is relational, the update will contain the primary key of the row to be changed and the values to be changed in each of the columns to be changed, identifying which change to be performed on which column. The new version of the row comprises the same primary key as the primary key that identifies the row change and a new information associated to that primary key. Additionally, the new version of the row comprises a commit timestamp that is the same as the commit timestamp associated with the row change. Once said new version of the row has been generated, the source data server finally adds it to the data fragment to be moved.

The transactional distributed database system might have in place a system to remove obsolete versions that are not needed anymore. This mechanism is orthogonal to the present invention and it is able to remove obsolete rows from both the origin and destination data fragments.

The distributed data manager then configures the source data server to send all the row or rows from the data fragment to be moved to the destination data server. The data servers are configured so that they guarantee that a row is moved atomically and that changes on any row are also atomic with respect to the movement process. This means that a change in a row can happen before or after the row is copied and sent to the destination server, but not while it is being copied.

The troublesome row changes are those that happened before moving a row because they can be applied twice. That is, when the idempotence becomes critical. For a row that was changed by a transaction, for instance, with an update, a new version of the row was generated tagged with the commit timestamp of the transaction. When this update is going to be applied on the destination server, this server will identify that the update was already applied, because there is a version of the row labelled with that commit timestamp and it will discard the update to attain idempotence.

To achieve this, once all the rows have been sent to the destination data server, the destination data server sequentially processes the row changes stored in the data buffer. The data buffer can get more row changes appended to it due to new row changes issued by any client side while the destination data server processes the row changes in the data buffer.

In particular, for each row change stored in the data buffer, the destination data server checks if there is a row in its destination data fragment that comprises a primary key and a commit timestamp that are equal to the primary key that identifies the row change and the commit timestamp associated to the row change.

If there is a row in the destination data fragment comprising said combination of primary key and commit timestamp, it means that the row change was applied before the row movement in the source data fragment, so no modification of data is needed at the destination data fragment. Thus, in order not to apply twice the same change, the destination data server discards the change stored in the data buffer.

Otherwise, if there is not a row with a combination of primary key and commit timestamp equal to the combination of primary key and commit timestamp of the row change, it means that a client side sent the row change to the data servers after the data fragment movement was performed. In this way, said row change must be applied to the row in the destination data fragment of the destination data server to guarantee that the row change is not lost. Thus, the destination data server applies said row change to the row stored therein.

To achieve this, the destination data server generates a new version of the row according to the row change stored in the data buffer, the new version of the row comprising the same primary key as the primary key associated with the row change and comprising a commit timestamp equal to the commit timestamp associated with the row change. Once said new version has been generated by the destination data server, the destination data server adds the new version of the row to the destination data fragment.

Next, when every row change stored in the data buffer has been processed, including the new row changes issued by any client side while the destination data server was processing the row changes in the data buffer, the distributed data manager performs the following steps.

First, the distributed data manager configures the destination data server to directly apply the row change operations sent by the client sides from this moment to the destination data fragment, instead of storing said row changes in the data buffer.

To achieve this, the destination data server generates, for each further row change received from at least one client side, a new version of the row according to the further row change. This new version of the row comprises the same primary key as the primary key associated with the further row change and it also comprises a commit timestamp that is equal to the commit timestamp associated with the further row change. Then, the destination data server adds the new version of the row to its destination data fragment.

After this, the distributed data manager configures all the client sides to send all operations relative to the moved data fragment, both reads and changes, just to the destination data server, which will continue applying the further row changes as previously mentioned.

Finally, the distributed data manager removes the source data fragment from the source data server that has been moved to the destination data server.

The present invention, therefore, solves how to move data while said data is being modified preserving full transactional consistency. To achieve this, as described before, the invention provides a method able to create an online replica of the data fragment with synchronous replication that guarantees that the original data fragment and the copied data fragment are kept up to date at the end of the process and thus, the original copy can be dismissed. The method uses multiversioning in which each row version is labeled with a commit timestamps; that is, the commit timestamps ordering is used as serialization order (i.e., the order in which transactions are committed).

Taking into account that rows can be changed multiple times during the movement process, the invention leverages from the fact that the transactional distributed database system is based on multi version concurrency control to guarantee that row changes are idempotent; that is, that the result of applying a row change one or more times has the same effect as applying it only once.

Besides, this online data fragment movement method is really versatile, as it can be applied for several purposes.

The first one is to preserve the scalability of distributed databases. As mentioned before, the method of the invention allows to balance the load across data servers dynamically without stopping the database. This is of critical importance for preserving the scalability in distributed databases, as they can only scale horizontally if an even distribution of the load exists among the data servers.

The ideal distributed database should scale out linearly, meaning that n servers deliver n times the performance of a single server. With an unbalanced load, this scalability can be reduced or even in the limit, it can be totally eliminated, since all the load could be concentrated on one single server resulting in null scalability, that is, that n servers has the same performance as only one.

Another purpose of the invention is enabling to dynamically add new servers or to decommission existing ones without stopping operations, as both actions require to move data fragments across the servers. Advantageously, the method of the invention achieves dynamic elasticity for the transactional distributed database system.

Finally, the method of the invention can also be used to add new replicas in a replicated database with synchronous replication also known as active-active replication without disrupting the operations. It can also be used to recover failed replicas.

In a particular embodiment, *the transactional distributed database system carrying out the steps of the method further comprises a dynamic reconfiguration manager configured to provide the data fragment movement operation command to the distributed data manager; and wherein the data fragment movement operation command received by the distributed data manager in step (a)* of *the method is sent by the dynamic reconfiguration manager.*

Throughout this document, "dynamic reconfiguration manager" will be understood as an element of the transactional distributed database system configured to take decisions of reconfiguring the transactional distributed database system by itself.

This dynamic reconfiguration manager, among other tasks, manages the elasticity of the transactional distributed database system and controls the load balancing among the servers of the transactional distributed database system. In this way, when the dynamic reconfiguration manager detects that a data fragment movement is needed, it sends a data fragment movement operation command to the distributed data manager.

For example, the dynamic reconfiguration manager can detect that the load in the system is low enough that can be handled with one less server and then it decides to decommission the server. In this situation, it can command the distributed data manager to move the load of said server to the rest of servers. In another example, the dynamic reconfiguration manager can detect an unbalanced load among several servers so, in this situation, it orders the distributed data manager to move certain part of load of the most loaded servers to the less loaded ones by moving data fragments across the servers.

In a particular embodiment, *the movement operation command received by the distributed data manager in step (a) of the method is sent by a database administrator.*

Throughout this document, "database administrator" will be understood as a user in charge of the design, management, maintenance and evaluation of the distributed database.

This database administrator, among others tasks, manages the elasticity of the transactional distributed database system and controls the dynamic balance of the load among the servers of the transactional distributed database system. In this way, when the database administrator detects that a data fragment movement is needed, he/she sends a data fragment movement operation command to the distributed data manager.

For example, the database administrator can detect or decide that a server has to be decommissioned and, in this situation, he or she orders the distributed data manager to move the load of said server to other server or servers. In another example, the database administrator can detect an unbalanced load among several servers and, in this situation, he or she orders the distributed data manager to move certain part of load of the most loaded servers to the less loaded ones by moving data fragments across them.

In a particular embodiment, *the one or more row changes comprise:*
- a row *insert operation; or*
- a row *deletion operation; or*
- a row *update operation; or*
- *a combination* of *at least two of the previous.*

In this embodiment, several types of row changing operations are described notwithstanding that other sorts of operations can be valid in the context of the invention.

In a particular embodiment, *the row deletion operation requires to assign a tombstone value to the row.*

Throughout this document, a "tombstone" is a deletion record of value assigned to a row to indicate that said row does no longer exists at a certain commit timestamp. The tombstone version preserves the primary key of the deleted row and is labelled with the commit timestamp as any other row version.

In a particular embodiment, *the data fragment comprises a search tree* as a *data structure.* In a more particular embodiment, *the search tree is of the type:*
- *B+ tree; or*
- *Log Structured Merge tree.*

In the context of the invention, any search data structure is suitable to be used to store data in the data fragments. Depending on the workload, it is possible to use data structures that are efficient for IO-bound workloads minimizing the read/writes performed over persistent storage (e.g., B+ trees and Log Structured Merge trees), or to use data structures that are efficient for CPU-bound workloads where data fits in memory and they are aimed at reducing the CPU cost, e.g., AVL trees, red-black trees, etc.

In a preferred embodiment, the search data structure is a search tree. Preferred examples of search tree are the B+ tree structure, which is commonly used in databases to store the information so that said information can be searched efficiently; and the Log Structured Merge tree, which is commonly used by databases to search information efficiently while being also efficient in ingesting data. Both data structures can be used to store the data in the data fragments.

In these embodiments, several types of search data structures are described notwithstanding that other sorts of data structures can be valid in the context of the invention. In particular, any other kind of data structures efficient to search data and/or ingest data can be used in the context of the invention.

In a particular embodiment, *the step a) of the method comprises receiving further data fragment movement operation commands for different data fragments, and wherein the steps b)-i) of the method for each data fragment movement operation command received during the execution of one or more previous data fragment movement operation commands are executed in parallel with the steps b)-i) of the method for said one or more previous data fragment movement operation commands.*

Several new data fragment movement operation commands can be received during the execution of a specific data fragment movement operation command. In such cases, preferably, it is possible to execute the method for one or more of the new data fragment movement operation commands in parallel with the method (or methods) previously ongoing. Alternatively, the commands can be executed sequentially.

In a particular embodiment, *the transactional distributed database system carrying out the steps of the method further comprises an inventory connected to the distributed data manager and the method further comprises:*
- *a previous step of registering in the inventory, by the distributed data manager, that the data fragment movement operation is ongoing; and*/*or*
- *a sub-step of the step i) of registering in the inventory, by the distributed data manager, that the data fragment movement operation is finished, and*/*or*
- *a step, concurrent to any of the steps of the method a)-j), of registering in the inventory each step of the method that is being executed or that has been completed.*

Throughout this document, "inventory" will be understood as a register storing information about the data fragments and data fragment movement process.

In this embodiment, the distributed data manager stores in the inventory when the process is ongoing, and/or when the process ends and/or when each step of the method is being executed or has been completed.

In a particular embodiment, *the method further comprises carrying out, by the distributed data manager, the following substeps concurrently with the other steps of the method a)-i):*
- *registering in the inventory an identification of the source data server; and*/*or*
- *registering in the inventory an identification of the at least one destination data server; and*/*or*
- *registering in the inventory how tables are split into data fragments and an identification of each data fragment and in which data server the data fragment is stored; and*/*or*
- *registering in the inventory an identification of the at least one client side; and*/*or*
- *registering in the inventory a list of the status of the at least one data fragment movement operation command sent to the distributed data manager.*

In this embodiment, the distributed data manager further registers in the inventory other type of information regarding the data fragment movement process. Advantageously, the transactional distributed database system can keep a register with the servers that are acting in the data fragment movement operation, with the client sides, with the instances of each of the client sides and/or with the data fragments being moved and information about them, and/or the status of each data fragment movement operation command.

However, in this embodiment, several types of information about the data fragment movement process are described, notwithstanding that other sort of information can be valid in the context of the invention.

In a second inventive aspect, the invention provides *a transactional distributed database system to perform at least one data fragment movement operation, the transactional distributed database system being adapted to interact with at least one client side and comprising at least a transactional manager and a distributed data manager which, in turn, comprises at least two data servers, wherein the distributed data manager is adapted to:*
∘ *receive data fragment movement operation commands to move data fragments; wherein each data fragment movement operation command comprises a data fragment identifier, an identifier of the source data server from which the data fragment will be moved and an identifier of the destination data server to which the data fragment will be moved;*
∘ *upon receiving* a *data fragment movement operation command, identifying the data fragment to be moved according to the data fragment identifier, and the source data server and the destination data server according to the identifier of the source data server and the identifier of the destination data fragment;*
∘ *execute the command of the movement of the data fragment from the source data server to the destination data server using a data buffer upon receiving the data fragment movement operation command; and*
*wherein the distributed data manager is configured for carrying out the steps of the method a)-d), f) and h)-i) according to the first inventive aspect, the source data server is configured for carrying out the step e) of the method according to the first inventive aspect, and the destination data server is configured for carrying out the step g) of the method according to the first inventive aspect.*

Note that the steps of the method of making registrations in the inventory are not contemplated in this general embodiment.

In a particular embodiment, *the transactional distributed database system further comprises an inventory, wherein the at least one data manager is further configured for carrying out the steps of the method according to the first inventive aspect.*

Note that the steps of the method of making registrations in the inventory are contemplated in this particular embodiment.

In a particular embodiment, *the transactional distributed database system further comprises a dynamic reconfiguration manager configured for sending, to the distributed data manager, the data fragment movement operation command.*

In this way, the dynamic reconfiguration manager is responsible for triggering the data fragment movement operations.

In another embodiment, the transactional distributed database system can have a mechanism to enforce serializability transactional isolation over multi version concurrency control.

A third inventive aspect of the invention corresponds to a *computer program product comprising instructions which, when the program is executed by a computer, cause the computer to carry out the steps of the method according to the first inventive aspect.*

A fourth inventive aspect of the invention corresponds to a *computer-readable storage medium comprising instructions which, when executed by a computer, cause the computer to carry out the steps of the method according to the first inventive aspect.*

All the advantages described above for the method steps can be extrapolated to the transactional distributed database system, the computer program product and the computer-readable storage medium carrying out said method.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
Figure 1 a) This figure shows the transactional distributed database system performing a data fragment movement operation according to an embodiment of the present invention in which a data fragment movement operation command is provided by a dynamic reconfiguration manager. b) This figure shows an alternative embodiment of the present invention in which the transactional distributed database system performing a data fragment movement operation receives a data fragment movement operation command from a database administrator.
Figure 2 This figure shows the row changes stored in the data buffer, along with the structure of the data fragments of both data servers.
Figure 3 This flowchart shows the main steps of a method for performing a data fragment movement operation in a transactional distributed database system, according to an embodiment of the present invention.
Figure 4 This flowchart corresponds to the same case as displayed in Figure 3 further comprising an additional step of registering in the inventory that the data fragment movement operation is ongoing and an additional step of registering in the inventory that the data fragment movement operation is finished.

### DETAILED DESCRIPTION OF THE INVENTION

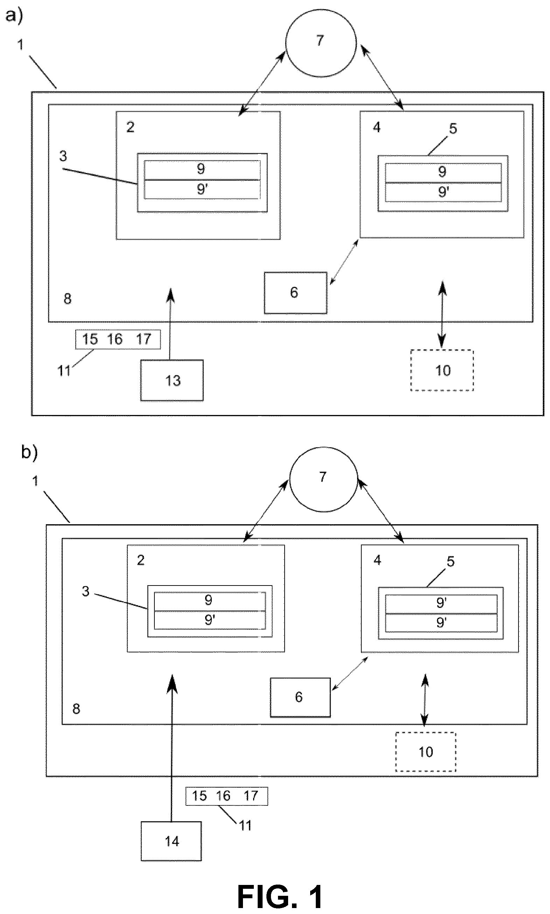

An aspect of the present invention corresponds to a transactional distributed database system (1) performing data fragment movement operations. An embodiment of this transactional distributed database system (1) according to this invention is illustrated in Figure 1. The transactional distributed database system (1) is adapted to interact with at least one client side (7) and comprises a transactional manager and a distributed data manager (8) which, in turn, comprises at least two data servers (2, 4). The client sides (7) can continuously send operation request to access (read, change) the data stored in the data servers (2, 4), even when a data fragment is being moved.

The distributed data manager (8) is adapted to:
∘ receive data fragment movement operation commands (11) to move data fragments (3); wherein each data fragment movement operation command (11) comprises a data fragment identifier (15), an identifier of the source data server (16) from which the data fragment (3) will be moved and an identifier of the destination data server (17) to which the data fragment (3) will be moved;
∘ upon receiving a data fragment movement operation command (11), identify the data fragment (3) to be moved according to the data fragment identifier (15), and the source data server (2) and the destination data server (4) according to the identifier of the source data server (16) and the identifier of the destination data server (17);
∘ execute the command of the movement of the data fragment (3) from the source data server (2) to the destination data server (4) using a data buffer (6) upon receiving the data fragment movement operation command (11);

The destination data server (4) of the transactional distributed database system (1), therefore, is connected to a data buffer (6), which operates as a queue for temporal storage of data. This data buffer could be, for example, in the local main memory of the destination data server, in a local persistent storage or in persistent storage connected through the destination data server through some means such as a computer network.

It is worth pointing out that in Figure 1a, the distributed data manager (8) receives the data fragment movement operation command (11) from a dynamic reconfiguration manager (13) which is integrated in the transactional distributed database system (1). The data fragment movement operation command (11) triggers the movement of the source data fragment (3) from the source data server (2) to the destination data server (4) that involves moving all the at least one row (9) of the data fragment (3) from the at least one source data server (2) to the at least one destination data server (4).

In this way, upon receiving the data fragment movement operation command (11), the distributed data manager (8) configures the data servers (2, 4) to move the data fragment (3) of the source data server (2) to the destination data server (4) and to store it into a destination data fragment (5). The data fragments (3, 5) and the data buffer (6) are organized in data rows (9, 9') and each row (9, 9') comprises a primary key (9.1, 9.1'), a commit timestamp (9.2, 9.2') and, optionally, an associated value (9.3, 9.3'). The data row (9, 9') is uniquely identified by its primary key (9.1, 9.1').

The database managed by the transactional distributed database system (1) can be structured into units such as tables. These units contain smaller units called rows (9, 9'). Such unit, as for instance a table, comprises all the rows from all the data servers (2, 4). Note that the table or equivalent unit can be divided into different data fragments (3, 5) stored in different data servers (2, 4).

Furthermore, the transactional distributed database system (1) of Figure 1a can comprise an inventory (10) (shown in the Figure with dashed lines) which is connected to and can be accessed by the distributed data manager (8). The distributed data manager (8) is configured to register, in this inventory (10), when the data fragment movement operation is ongoing, and/or when said data fragment movement operation is finished and/or when the different steps of the process are being executed or have been finished. Additionally, the data distributed data manager (8) can be further configured to register in the inventory (10) an identification of the source data server (2), and/or an identification of the at least one destination data server (4); and/or how tables are split into data fragments (3, 5) and an identification of each data fragment (3, 5) and in which data server (2, 4) the data fragment (3, 5) is stored; and/or an identification of the at least one client side (7); and/or a list of the status (ongoing, completed) of the at least one data fragment movement operation commands (11) sent to the distributed data manager (8).

In an embodiment, the source data fragment (3) and/or the destination data fragment (5) are stored using a search tree. In a more particular embodiment, the search tree is of the type:
- B+ tree; or
- Log Structured Merge tree.

As an alternative to the embodiment displayed Figure 1a, Figure 1b shows how the data fragment operation command (11) can be provided to the distributed data manager (8) by means of a database administrator (14) instead of using the dynamic reconfiguration manager (13). The rest of the transactional distributed database system (1) does not change with respect to Figure 1a.

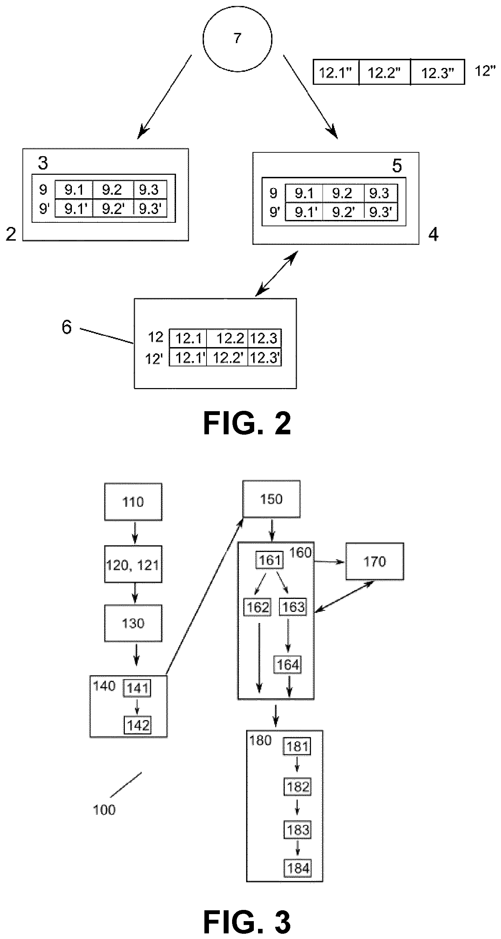

Figure 2 shows the structure of the data fragment (3) being moved and the destination data fragment (5) once the data has been moved. Each of the rows (9) stored in the data fragment (3) comprises a primary key (9.1), a commit timestamp (9.2) and, optionally, an associated value (9.3). In the same way, each of the rows (9) stored in the destination data fragment (5) comprises a primary key (9.1), a commit timestamp (9.2) and, optionally, an associated value (9.3). Additionally, for both data fragments (3, 5), new versions of the rows (9') are shown. Said new versions (9') also comprises a primary key (9.1'), which is the same as the primary key (9.1) of the original row (9); a commit timestamp (9.2') and one or more associated values (9.3'). These new versions (9') are generated responding to a request to change the original row (9) made from the client sides (7), as it will be explained below.

On the other hand, the data buffer (6) stores one or more row changes (12), which may follow the same data structure as the rows (9). In this way, the row changes (12) stored in the data buffer (6) may comprise a primary key (12.1), a commit timestamp (12.2) and an associated value (12.3). Additionally, the data buffer stores one or more new row changes (12'), which are received from the client sides (7) while the row changes (12) are being processed by the destination data server (4); the new row changes (12') comprising a primary key (12.1'), a commit timestamp (12.2') and an associated value (12.3'). The further row changes (12"), which are sent only to the destination data server (4), also comprise the same structure: a primary key (12.1"), a commit timestamp (12.2") and an associated value (12.3").

Another aspect of the present invention corresponds to a computer implemented method (100) for performing a data fragment movement in a distributed database which is executed in the transactional distributed database system (1) described above.

Figure 3 shows a flowchart with the main steps of the method (100) of the transactional distributed database system (1) in an embodiment of this invention. Below, the steps of the method (100) are described for the case of a data fragment movement operation involving at least one row (9) (from now "rows", for simplicity) of the data fragment (3) which is moved to the destination data server (4):
a) Receiving (110), the distributed data manager (8), a data fragment movement operation command (11) comprising a data fragment identifier (15) and an identifier of the source data server (16) from which the data fragment (3) will be moved and an identifier of the destination data server (17) to which the data fragment (3) will be moved.
b) Configuring (120), by the distributed data manager (8), the destination data server (4) to store, in a data buffer (6), one or more row changes (12) for the at least one row (9) of the data fragment (3) to be moved, said one or more row changes (12) being received from at least one client side (7); wherein each row change (12) among all the row changes is identified by a primary key (12.1) and has associated a commit timestamp (12.2).
c) Further configuring (121), by the distributed data manager (8), the destination data server (4) to create therein (4) a destination data fragment (5) with the same identifier (15) as the identifier of the data fragment (3).
d) Configuring (130), by the distributed data manager (8), all the at least one client side (7) to allow said all at least one client side (7) to send the one or more row changes (12) for the at least one row (9) of the data fragment (3) to be moved to both the source data server (2) and the destination data server (4). Note that the row changes that occur while the data fragment movement operation is ongoing must be propagated to both data servers (2, 4) in order to guarantee data consistency in the transactional distributed database system (1).
e) Performing (140), by the source data server (2), the following substeps:
   - generating (141), for each row change (12), a new version of the row (9') according to the row change (12); wherein the new version of the row (9') comprises the same primary key (9.1') as the primary key (12.1) that identifies the row change (12) and wherein the commit timestamp (9.2') of the new version of the row (9') is the commit timestamp (12.2) associated with the row change (12), and
   - adding (142) the new version of the row (9') to the data fragment (3) to be moved;
f) Configuring (150), by the distributed data manager (8), the source data server (2) to send all the at least one row (9) of the data fragment (3) to be moved to the at least one destination data server (4);
g) Once all the at least one row (9) of the data fragment (3) has been moved to the destination server (4), sequentially processing (160), by the destination server (4), the one or more row changes (12) stored in the data buffer (6) to:
   - Check (161), for each row change (12), if there is a row (9) in a destination data fragment (5) of the destination data server (4) comprising a primary key (9.1) and a commit timestamp (9.2) that are equal to the primary key (12.1) that identifies the row change (12) and the commit timestamp (12.2) associated to the row change (12).
   - If so (when the checking process finds a row (9) in the destination data fragment (5) for a certain row change (12)), discard (162) the row change (12) stored in the data buffer (6); or
   - Otherwise, if the step of check (161) throws that no row (9) exists in the destination data fragment (5) for said row change (12), these steps are performed:
      generate (163) a new version of the row (9') according to the row change (12), wherein the new version of the row (9') comprises the same primary key (9.1') as the primary key (12.1) associated with the row change (12) and wherein the commit timestamp (9.2') of the new version of the row (9') is the commit timestamp (12.2) associated with the row change (12), and
      add (164) the new version of the row (9') to the destination data fragment (5).
h) Concurrently to step g), configuring (170), by the distributed data manager (8), the destination data server (4) to store at least one new row change (12') for the at least one row (9) of the data fragment (3) being moved in the data buffer (6), if any.
i) Once all row changes (12, 12') have been processed by the destination data server (4) and the data buffer (6) is empty, sequentially performing (180), by the distributed data manager (8), the following steps:
   - Configuring (181) the destination data server (4) to
      generate, for each further row change (12") for the at least one row (9) of the data fragment (3) to be moved received from at least one client side (7), a new version of the row (9') according to the further row change (12"), wherein the new version of the row (9') has the same primary key (9.1') as the primary key (12.1") associated with the further row change (12") and wherein the commit timestamp (9.2') of the new version of the row (9') is the commit timestamp (12.2") associated with the further row change (12"), and
      add the new version of the row (9') to the destination data fragment (5).
   - Configuring (182) all the at least one client side (7) to send read operations for the data fragment identified by the identifier (15) comprised in the data fragment movement command (11), only to the destination data server (4).
   - Once the previous step has been completed, configuring (183) all the at least one client side (7) to send the one or more further row changes (12") for the at least one row (9) of the data fragment identified by the identifier (15) comprised in the data fragment movement command (11).
   - And once the previous step has been completed, removing (184), from the source data server (2), the data fragment (3) moved to the destination data server (4).

In an embodiment, the one or more row changes (12, 12', 12") comprise:
- a row insert operation; or
- a row deletion operation; or
- a row update operation; or
- a combination of at least two of the previous.

In an embodiment, the row deletion operation requires to assign a tombstone value to the row.

In an embodiment, the step a) of the method comprises receiving further data fragment movement operation commands (11) for different data fragments (3), and wherein the steps b)-i) of the method for each data fragment movement operation command (11) received during the execution of one or more previous data fragment movement operation commands (11) are executed in parallel with the steps b)-i) of the method for said one or more previous data fragment movement operation commands (11).

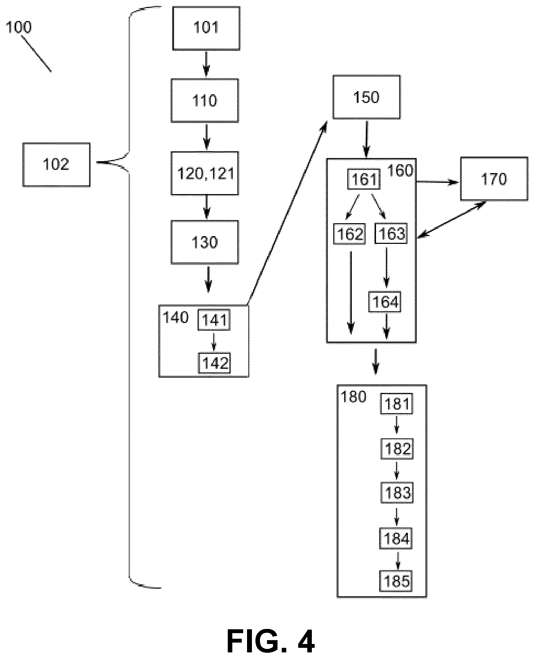

Figure 4 shows a preferred embodiment of the method (100) similar to the one displayed in Figure 3, but further comprising a step (101) of registering in the inventory (10) that the data fragment movement operation is ongoing, which is performed before the step of receiving (110) the data fragment movement operation command; and also comprises a sub-step (185) of registering in the inventory (10) that the data fragment movement operation is finished, which is performed after the step of removing (183) the row (9) from the source data fragment (3). Additionally, the method (100) comprises a step (102) concurrent with the rest of the steps of the method a)-i) of registering in the inventory (10) each step of the method that is being executed or that has been completed.

These steps (101, 185, 102) of registering are performed by the distributed data manager (8), which is responsible for keeping the inventory (10) updated and consistent with the latest row changes in the transactional distributed database system (1).

In an embodiment, the method (100) further comprises carrying out, by the distributed data manager (8), the following steps concurrently with the other steps:
- registering in the inventory (10) an identification of the source data server (2); and/or
- registering in the inventory (10) an identification of the at least one destination data server (4); and/or
- registering in the inventory (10) how tables are split into data fragments (3, 5) and an identification of each data fragment (3, 5) and in which data server (2, 4) the data fragment (3, 5) is stored; and/or
- registering in the inventory (10) an identification of the at least one client side (7); and/or
- registering in the inventory (10) a list of the status of the at least one data fragment movement operation command (11) sent to the distributed data manager (8).

### Description of the transactional distributed database system (1) used in the "Example 1", "Example 2", and "Example 3"

To better understand how the method (100) of the present invention works, let us assume that we have a transactional distributed database system (1) that comprises a source data server (2) ds1, a destination data server (4) ds2; as well as two client sides (7) which are further referred to as cl1 and cl2. Said transactional distributed database system (1) stores a table of information with two columns: the first one is an integer (also working as the primary key (9.1)) and the second one (the associated value (9.3)) is another integer. This table is split into three data fragments (or fragments): df1, df2 and df3. The fragments df1 and df2 are handled by the source data server (2) while df3 is handled by the destination data server (4). In this transactional distributed database system (1), three different examples ("Example 1", "Example 2" and "Example 3") of data fragment movement operations are performed, as described below. In the three examples the data fragment df1 is moved from ds1 to ds2. Note that the data fragment identifier, df1, does not change despite the movement, there are actually two instances of the data fragment, one kept at the source data server (2) and another at the destination data server (4) that we call data fragment (3) and destination data fragment (5).

### Example 1:

The data fragment movement operation (or reconfiguration) considered in the example moves the data fragment (3) from the source data server (2) ds1 to a destination data server (4) ds2. Before starting the data fragment movement operation, the data fragment (3) has the following content:
(0, 0, CTS=0)
(1, 10, CTS=1)
(2, 20, CTS=2)
(3, 30, CTS=3)
(4, 40, CTS=4)
(5, 50, CTS=5)
(6, 60, CTS=6)

Above, each line represents a different row (9) of the data fragment (3). Note that, in addition to the primary key of each row (9.1) and the associated value (9.3), the commit timestamp (9.2) (further referred to as CTS) of each row (9) of the table is also shown.

**To** perform the aforementioned operations, the following sequence is performed by the method (100) (for each row change (12, 12') in the sequence, the primary key (9.1), the associated value (9.3) and CTS (9.2) of the transaction that performs the update are shown):
- **The** row (9) with primary key 0 is updated to (0, 5, CTS=7) before being moved.
- **The** row (9) with primary key 0 is moved.
- **The** row (9) with primary key 6 is deleted (6, tombstone, CTS=8) before being moved.
- **The** row (9) with primary key 7 is inserted (7, 75, CTS=9) before being moved.
- The row (9) with primary key 1 is moved.
- All client sides get reconfigured to send row changes relative to the data fragment being moved to both source and destination data servers.
- The row (9) with primary key 2 is updated to (2, 21, CTS=10) before being moved.
- The row (9) with primary key 4 is updated to (4, 42, CTS=11) before being moved.
- The row (9) with primary key 5 is updated to (5, 53, CTS=11) before being moved.
- The row (9) with primary key 2 is moved.
- The row (9) with primary key 5 is updated to (5, 54, CTS=12) for a second time before being moved.
- The row (9) with primary key 3 is moved.
- The row (9) with primary key 4 is moved.
- The row (9) with primary key 3 is updated to (3, 35, CTS=13) after being moved.
- The row (9) with primary key 5 is moved.
- The row (9) with primary key 4 is updated to (4, 46, CTS=14) after being moved.
- The row (9) with primary key 5 is updated to (5, 57, CTS=14) after being moved.
- The row (9) with primary key 5 is updated to (5, 58, CTS=15) after being moved for a second time.
- The row (9) with primary key 6 is moved.
- The row (9) with primary key 7 is moved.

At this point, all the row changes (12, 12') have been performed on the source data fragment (3) and they have been buffered on the data buffer (6) by the destination data server (4). Note that the rows (9) moved to the destination data server (4) might carry none or part of the row changes (12, 12').

Just after the data fragment movement operations between the data servers (2, 4) are completed, the destination data fragment (5) of the destination data server (4) has the following content:
(0, 5, CTS=7)
(0, 0, CTS=0)
(1, 10, CTS=1)
(2, 21, CTS=10)
(2, 20, CTS=2)
(3, 30, CTS=3)
(4, 42, CTS=11)
(4, 40, CTS=4)
(5, 54, CTS= 12)
(5, 53, CTS=11)
(5, 50, CTS=5)
(6, tombstone, CTS=8)
(6, 60, CTS=6)
(7, 75, CTS=9)

Once the data fragment movement operations between the source data server (2) and the destination data server (4) are finished, the destination data server (4) processes (160) the row changes (12, 12') stored in the data buffer (6) in the same order they happened (as the data buffer is a FIFO queue).

When processing the buffered row changes (12, 12') stored in the data buffer (6), the following sequence takes place:
- (2, 21, CTS=10) is discarded since there is a row (9) in the destination data fragment (5) with the same CTS and the same primary key as the row change (12).
- (4, 42, CTS=11) is discarded since there is a row (9) in the destination data fragment (5) with the same CTS and the same primary key as the row change (12).
- (5, 53, CTS=11) is discarded since there is a row (9) in the destination data fragment (5) with the same CTS and the same primary key as the row change (12).
- (5, 54, CTS=12) is discarded since there is a row (9) in the destination data fragment (5) with the same CTS and the same primary key as the row change (12).
- (3, 35, CTS=13) is applied since there is not a row (9) in the destination data fragment (5) with the same CTS and the same primary key as the row change (12).
- (4, 46, CTS=14) is applied since there is not a row (9) in the destination data fragment (5) with the same CTS and the same primary key as the row change (12).
- (5, 57, CTS=14) is applied since there is not a row (9) in the destination data fragment (5) with the same CTS and the same primary key as the row change (12).
- (5, 58, CTS=15) is applied since there is not a row (9) in the destination data fragment (5) with the same CTS and the same primary key as the row change (12).

Applying the row change (12, 12') requires that the destination data server (4) generates a new version of the row (9') according to said row change (12, 12') and adding the new version of the row (9') to the destination data fragment (5).

At the end of the process, the updated content of the data fragment df1 at the destination data server (4) is as follows:
(0, 5, CTS=7)
(0, 0, CTS=0)
(1, 10, CTS=1)
(2, 21, CTS=10)
(2, 20, CTS=2)
(3, 35, CTS=13)
(3, 30, CTS=3)
(4, 46, CTS=14)
(4, 42, CTS=11)
(4, 40, CTS=4)
(5, 58, CTS= 15)
(5, 57, CTS=14)
(5, 54, CTS= 12)
(5, 53, CTS=11)
(5, 50, CTS=5)
(6, tombstone, CTS=8)
(6, 60, CTS=6)
(7, 75, CTS=9)

At this point, since there are no more buffered row changes (12, 12') to be applied in the data buffer (6), both data servers (2, 4) are synchronized. After the data buffer becomes empty the destination data server (4) ds2 processes row changes as they arrive as the origin data server (2) is doing without buffering them. At this point, then the client sides will be reconfigured, first for reads and second for writes. This process is shown in Example 3.

### Example 2:

In this example, it is shown how the transactional distributed database system (1) reads and writes the rows (9) according to the commit timestamps (9.2) thereof.

In this example, the following table is given. The table has two columns, the first column being an integer and also the primary key (9.1) of the table and the second column (value column (9.3)) being an integer. The table comprises a third field being the commit timestamp, CTS (9.2):
(1, 10, CTS =0)
(2, 20, CTS =10)
(3, 30, CTS = 4)

The following read and write operations are executed over the table producing the stated results:
Read row with primary key 2 and read timestamp 9 returns not found.

Read row with primary key 2 and read timestamp 10 returns (2, 20).

Read row with primary key 2 and read timestamp 11 returns (2, 20).

Write row (2, 21, CTS =12) adds a new version of the row with primary key 2: (2, 21, CTS =12).

Read row with primary key 2 and read timestamp 9 returns not found.

Read row with primary key 2 and read timestamp 10 returns (2, 20).

Read row with primary key 2 and read timestamp 11 returns (2, 20).

Read row with primary key 2 and read timestamp 12 returns (2, 21).

Read row with primary key 2 and read timestamp 13 returns (2, 21).

Write row (2, 23, CTS =18) adds a new version of the row with primary key 2: (2, 23, CTS =18).

Read row with primary key 2 and read timestamp 9 returns not found.

Read row with primary key 2 and read timestamp 10 returns (2, 20).

Read row with primary key 2 and read timestamp 11 returns (2, 20).

Read row with primary key 2 and read timestamp 12 returns (2, 21).

Read row with primary key 2 and read timestamp 13 returns (2, 21).

Write row (2, 22, CTS =15) adds a new version of the row with primary key 2: (2, 22, CTS =15).

Read row with primary key 2 and read timestamp 9 returns not found.

Read row with primary key 2 and read timestamp 10 returns (2, 20).

Read row with primary key 2 and read timestamp 11 returns (2, 20).

Read row with primary key 2 and read timestamp 12 returns (2, 21).

Read row with primary key 2 and read timestamp 13 returns (2, 21).

Read row with primary key 2 and read timestamp 15 returns (2, 22).

Read row with primary key 2 and read timestamp 17 returns (2, 22).

Read row with primary key 2 and read timestamp 18 returns (2, 23).

Read row with primary key 2 and read timestamp 20 returns (2, 23).

Delete row (2, CTS =28) generates a tombstone version of the row indicating that is deleted (2, tombstone, CTS=28).

Read row with primary key 2 and read timestamp 9 returns not found.

Read row with primary key 2 and read timestamp 10 returns (2, 20).

Read row with primary key 2 and read timestamp 11 returns (2, 20).

Read row with primary key 2 and read timestamp 12 returns (2, 21).

Read row with primary key 2 and read timestamp 13 returns (2, 21).

Read row with primary key 2 and read timestamp 15 returns (2, 22).

Read row with primary key 2 and read timestamp 17 returns (2, 22).

Read row with primary key 2 and read timestamp 18 returns (2, 23).

Read row with primary key 2 and read timestamp 20 returns (2, 23).

Read row with primary key 2 and read timestamp 28 returns not found.

Read row with primary key 2 and read timestamp 29 returns not found.

### Example 3:

In this third example, the data fragment (3) df1 is moved from a source data server (2) to a destination data server (4). Initially, the content of the source data fragment (3) is as follows:
(0, 0, CTS=0)
(1, 10, CTS=1)
(2, 20, CTS=2)
(3, 30, CTS=3)
(4, 40, CTS=4)
(5, 50, CTS=5)
(6, 60, CTS=6)
(10, 100, CTS=10)

Let us now assume that the following data fragment movement operations take place between the source data server (2) and the destination data server (4), in the same order that they are listed below showing what the method (100) performs the following sequence (in the exact order it is listed below):
a) Initial write reconfiguration of the client sides (7):
   - The initial write reconfiguration of the client sides (7), cl1 and cl2, starts.
   - The first client side (7) cl1 is configured to send row changes (12, 12') to both data servers (2, 4), ds1 and ds2.
   - The row (9) with primary key 0 is updated to (0, 1, CTS=7) by cl2. Sent only to ds1 thus, not stored by ds2 in the data buffer (6)).
   - The row (9) with primary key 6 is deleted (6, tombstone, CTS=8) by cl1. Sent to both ds1 and ds2. ds2 stores it in the data buffer (6).
   - The row (9) with primary key 7 is inserted (7, 71, CTS=9) by cl2. Sent only to ds1 thus, not stored by ds2 in the data buffer (6)).
   - The second client side (7) cl2 is configured to send row changes (12, 12') to both data servers (2, 4), ds1 and ds2. From this point on, all row changes (12, 12') are sent to both data servers (2, 4), ds1 and ds2. For this reason, and in the sake of brevity, the destination of these row changes (12, 12') is no longer indicated.
   - The initial write reconfiguration of the client sides (7) is completed.
b) The data transfer between the source data server (2) and the destination data server (4) proceeds as follows:
   - The data fragment movement operations between the data servers (2, 4) start.
   - The row (9) with primary key 0 is moved.
   - The row (9) with primary key 1 is moved.
   - The row (9) with primary key 2 is updated to (2, 21, CTS=20) by cl1. Applied by ds1 before the row has been moved, buffered by ds2.
   - The row (9) with primary key 4 is updated to (4, 42, CTS=21) by cl2. Applied by ds1 before the row has been moved, buffered by ds2.
   - The row (9) with primary key 5 is updated to (5, 53, CTS=21) by cl2. Applied by ds1 before the row has been moved, buffered by ds2.
   - The row (9) with primary key 2 is moved.
   - The row (9) with primary key 5 is updated to (5, 54, CTS=22) by cl1. Applied by ds1 before the row has been moved, buffered by ds2.
   - The row (9) with primary key 8 is inserted (8, 85, CTS=22) by cl1. Applied by ds1 before the row has been moved, buffered by ds2.
   - The row (9) with primary key 3 is moved.
   - The row (9) with primary key 4 is moved.
   - The row (9) with primary key 3 is updated to (3, 35, CTS=23) by cl2. Applied by ds1 after the row has been moved, buffered by ds2.
   - The row (9) with primary key 5 is moved.
   - The row (9) with primary key 6 is moved.
   - The row (9) with primary key 7 is moved.
   - The row (9) with primary key 8 is moved.
   - The row (9) with primary key 8 is deleted, thereby yielding (8, tombstone, CTS=24) by cl1. Applied by ds1 after the row has been moved, buffered by ds2.
   - The row (9) with primary key 9 is inserted (9, 95, CTS=24) by cl1. Applied by ds1 before the row has been moved, buffered by ds2.
   - The row (9) with primary key 4 is updated to (4, 46, CTS=24) by cl1. Applied by ds1 after the row has been moved, buffered by ds2.
   - The row (9) with primary key 5 is updated to (5, 57, CTS=24) by cl1. Applied by ds1 after the row has been moved, buffered by ds2.
   - The row (9) with primary key 5 is updated to (5, 58, CTS=25) by cl2. Applied by ds1 after the row has been moved, buffered by ds2.
   - The row (9) with primary key 10 is updated to (10, 105, CTS=25) by cl2. Applied by ds1, buffered by ds2.
   - The row (9) with primary key 9 is moved.
   - The row (9) with primary key 10 is moved.
   - The row (9) with primary key 9 is updated to (9, 96, CTS=26) by cl1. Applied by ds1 after the row has been moved, buffered by ds2.
   - The row (9) with primary key 10 is deleted yielding the tombstone version (10, tombstone, CTS=26) by cl1. Applied by ds1 after the row has been moved, buffered by ds2.
   - The sending of df1 is completed

At this point df1 has already been sent from ds1 to ds2 and the data buffer at ds2 contains:
(6, tombstone, CTS=8)
(2, 21, CTS=20)
(4, 42, CTS=21)
(5, 53, CTS=21)
(5, 54, CTS=22)
(8, 85, CTS=22)
(3, 35, CTS=23)
(8, tombstone, CTS=24)
(9, 95, CTS=24)
(4, 46, CTS=24)
(5, 57, CTS=24)
(5, 58, CTS=25)
(10, 105, CTS=25)
(9, 96, CTS=26)
(10, tombstone, CTS=26)

Afterwards, the row changes (12, 12') stored in the data buffer (6) at the destination data server (4) are applied in sequence, as follows.
c) Application of the data buffer (6):
   - The row changes (12, 12') in the data buffer (6) start to be applied.
   - (6, tombstone, CTS=8) is discarded since there is a row (9) in the destination data fragment (5) with the same CTS and the same primary key as the row change (12).
   - (2, 21, CTS=20) is discarded since there is a row (9) in the destination data fragment (5) with the same CTS and the same primary key as the row change (12).
   - (4, 42, CTS=21) is discarded since there is a row (9) in the destination data fragment (5) with the same CTS and the same primary key as the row change (12).
   - (5, 53, CTS=21) is discarded since there is a row (9) in the destination data fragment (5) with the same CTS and the same primary key as the row change (12).
   - (5, 54, CTS=22) is discarded since there is a row (9) in the destination data fragment (5) with the same CTS and the same primary key as the row change (12).
   - (8, 85, CTS=22) is discarded since there is a row (9) in the destination data fragment (5) with the same CTS and the same primary key as the row change (12).
   - (3, 35, CTS=23) is applied since there is not a row (9) in the destination data fragment (5) with the same CTS and the same primary key as the row change (12).
   - (8, tombstone, CTS=24) is applied since there is not a row (9) in the destination data fragment (5) with the same CTS and the same primary key as the row change (12).
   - (9, 95, CTS=24) is discarded since there is a row (9) in the destination data fragment (5) with the same CTS and the same primary key as the row change (12).
   - (4, 46, CTS=24) is applied since there is not a row (9) in the destination data fragment (5) with the same CTS and the same primary key as the row change (12).
   - (5, 57, CTS=24) is applied since there is not a row (9) in the destination data fragment (5) with the same CTS and the same primary key as the row change (12).
   - (5, 58, CTS=25) is applied since there is not a row (9) in the destination data fragment (5) with the same CTS and the same primary key as the row change (12).
   - (10, 105, CTS=25) is discarded since there is a row (9) in the destination data fragment (5) with the same CTS and the same primary key as the row change (12).
   - (9, 96, CTS=26) is applied since there is not a row (9) in the destination data fragment (5) with the same CTS and the same primary key as the row change (12).
   - (10, tombstone, CTS=26) is applied since there is not a row (9) in the destination data fragment (5) with the same CTS and the same primary key as the row change (12).
   - The data buffer (6) is now empty and ds2 now processes further row changes without buffering.

In this way, once all the buffered row changes (12, 12') of the data buffer (6) have been applied by the destination data server (4), the destination data fragment (5) has the following content:
(0, 1, CTS=7)
(0, 0, CTS=0)
(1, 10, CTS=1)
(2, 22, CTS=27)
(2, 21, CTS=20)
(2, 20, CTS=2)
(3, 35, CTS=23)
(3, 30, CTS=3)
(4, 46, CTS=24)
(4, 42, CTS=21)
(4, 40, CTS=4)
(5, 58, CTS=25)
(5, 57, CTS=24)
(5, 54, CTS= 22)
(5, 53, CTS=21)
(5, 50, CTS=5)
(6, tombstone, CTS=8)
(6, 60, CTS=6)
(7, 71, CTS=9)
(8, tombstone, CTS=24)
(8, 85, CTS=22)
(9, 96, CTS=26)
(9, 95, CTS=24)
(10, tombstone, CTS=26)
(10, 105, CTS=25)
(10, 100, CTS=10)

d) Read reconfiguration of the client sides (7):
   - The read reconfiguration of the client sides (7) starts.
   - The client side (7) cl1 reads the row (9) with primary key 9 and start timestamp 26 and gets (9, 96, CTS=26) from ds1.
   - The client side (7) cl2 reads the row (9) with primary key 9 and start timestamp 26 and gets (9, 96, CTS=26) from ds1.
   - The client side (7) cl1 is configured to read df1 data only from ds2.
   - The row (9) with primary key 9 is updated to (9, 97, CTS=27) at both ds1 and ds2.
   - The client side (7) cl1 reads the row (9) with primary key 9 and read timestamp 27 and gets (9, 97, CTS=27) from ds2.
   - The client side (7) cl2 reads the row (9) with primary key 9 and read timestamp 27 and gets (9, 97, CTS=27) from ds1.
   - The client side (7) cl2 is configured to read df1 data only from ds2.
   - The client side (7) cl1 reads the row (9) with primary key 9 and read timestamp 9 and gets (9, 97, CTS=27) from ds2.
   - The client side (7) cl2 reads the row (9) with primary key 9 and read timestamp 27 and gets (9, 97, CTS=27) from ds2.
   - The read reconfiguration of the client sides (7) is completed.
e) Final write reconfiguration of the client sides (7):
   - The final write configuration of the client sides (7) starts.
   - The first client side (7) cl1 is configured to send writes over df1 only to ds2.
   - Row with primary key 5 is updated to (5, 500, CTS=27) by cl1.
   - The second client side (7) cl2 reads row (9) with primary key 5 and start timestamp 28 and gets (5, 500, CTS=28) from ds2.
   - The row (9) with primary key 7 is updated to (7, 700, CTS=29) by cl1 and sent and applied only by ds2.
   - The row (9) with primary key 7 is updated to (7, 701, CTS=30) by cl2 and applied by ds1 and ds2. Note that the source data server (2) ds1 is out of date, thereby missing the previous update. However, this does not cause any trouble since df1 data content is never read from the source data server (2) ds1 after the previous read client side reconfiguration.
   - The first client side (7) cl1 reads row with primary key 7 and start timestamp 29 and gets (7, 700, CTS=29) from ds2.
   - The second client side (7) cl2 is configured to send writes over df1 only to ds2.
   - The final write configuration of the client sides (7) is completed.
f) Pending row changes (12") to be applied only by the destination data server (4) ds2:
   - The row (9) with primary key 9 is updated to (9, 900, CTS=31) by the client side (7) cl2 and is only applied by ds2.
   - The source data server (2) ds1 is configured to remove the source data fragment (3) df1.
   - The source data fragment (3) df1 is removed from the source data server (2) ds1

Just after the movement has finalized, the destination data fragment (5) at the destination data server (4) ds2 contains the following:
(0, 1, CTS=7)
(0, 0, CTS=0)
(1, 10, CTS=1)
(2, 22, CTS=27)
(2, 21, CTS=20)
(2, 20, CTS=2)
(3, 35, CTS=23)
(3, 30, CTS=3)
(4, 46, CTS=24)
(4, 42, CTS=21)
(4, 40, CTS=4)
(5, 500, CTS=27)
(5, 58, CTS=25)
(5, 57, CTS=24)
(5, 54, CTS= 22)
(5, 53, CTS=21)
(5, 50, CTS=5)
(6, tombstone, CTS=8)
(6, 60, CTS=6)
(7, 701, CTS=30)
(7, 700, CTS=29)
(7, 71, CTS=9)
(8, tombstone, CTS=24)
(8, 85, CTS=22)
(9, 900, CTS=31)
(9, 96, CTS=26)
(9, 95, CTS=24)
(10, tombstone, CTS=26)
(10, 105, CTS=25)
(10, 100, CTS=10)
(11, 100, CTS=28)

## Claims

1. A computer implemented method (100) to perform at least one data fragment movement operation in a transactional distributed database system (1) adapted to interact with at least one client side (7),
wherein said transactional distributed database system (1) comprises at least a transactional manager and a distributed data manager (8), the distributed data manager (8) comprising at least two data servers (2, 4); and wherein the distributed data manager (8) is adapted to:
o receive data fragment movement operation commands (11) to move data fragments (3); wherein each data fragment movement operation command (11) comprises a data fragment identifier (15), an identifier of the source data server (16) from which the data fragment (3) will be moved and an identifier of the destination data server (17) to which the data fragment (3) will be moved;
∘ upon receiving a data fragment movement operation command (11), identify the data fragment (3) to be moved according to the data fragment identifier (15), and the source data server (2) and the destination data server (4) according to the identifier of the source data server (16) and the identifier of the destination data server (17);
∘ execute the command of the movement of the data fragment (3) from the source data server (2) to the destination data server (4) using a data buffer (6) upon receiving the data fragment movement operation command (11);
wherein the data fragment (3) comprises at least one row (9), each row (9) being uniquely identified by a primary key (9.1); and each row (9) comprising the primary key (9.1), a commit timestamp (9.2), and optionally at least one associated value (9.3); and wherein the method (100) comprises the following steps:
a) receiving (110), the distributed data manager (8), a data fragment movement operation command (11) comprising a data fragment identifier (15) and an identifier of the source data server (16) from which the data fragment (3) will be moved and an identifier of the destination data server (17) to which the data fragment (3) will be moved;
b) configuring (120), by the distributed data manager (8), the destination data server (4) to store, in a data buffer (6), one or more row changes (12) for the at least one row (9) of the data fragment (3) to be moved, said one or more row changes (12) being received from at least one client side (7); wherein each row change (12) among all the row changes is identified by a primary key (12.1) and has associated a commit timestamp (12.2);
c) further configuring (121), by the distributed data manager (8), the destination data server (4) to create therein (4) a destination data fragment (5) with the same identifier (15) as the identifier of the data fragment (3);
d) configuring (130), by the distributed data manager (8), all the at least one client side (7) to allow said all at least one client side (7) to send the one or more row changes (12) for the at least one row (9) of the data fragment (3) to be moved to both the source data server (2) and the destination data server (4);
e) performing (140), by the source data server (2), the following substeps:
- generating (141), for each row change (12), a new version of the row (9') according to the row change (12); wherein the new version of the row (9') comprises the same primary key (9.1') as the primary key (12.1) that identifies the row change (12) and wherein the commit timestamp (9.2') of the new version of the row (9') is the commit timestamp (12.2) associated with the row change (12), and
- adding (142) the new version of the row (9') to the data fragment (3) to be moved;
f) configuring (150), by the distributed data manager (8), the source data server (2) to send all the at least one row (9) of the data fragment (3) to be moved to the at least one destination data server (4);
g) once all the at least one row (9) of the data fragment (3) has been moved to the destination server (4), sequentially processing (160), by the destination server (4), the one or more row changes (12) stored in the data buffer (6) to:
- check (161), for each row change (12), if there is a row (9) in a destination data fragment (5) of the destination data server (4) comprising a primary key (9.1) and a commit timestamp (9.2) that are equal to the primary key (12.1) that identifies the row change (12) and the commit timestamp (12.2) associated to the row change (12);
- if so, discard (162) the row change (12) stored in the data buffer (6); or
- otherwise:
generate (163) a new version of the row (9') according to the row change (12), wherein the new version of the row (9') comprises the same primary key (9.1') as the primary key (12.1) associated with the row change (12) and wherein the commit timestamp (9.2') of the new version of the row (9') is the commit timestamp (12.2) associated with the row change (12), and
add (164) the new version of the row (9') to the destination data fragment (5);
h) concurrently to step g), configuring (170), by the distributed data manager (8), the destination data server (4) to store at least one new row change (12') for the at least one row (9) of the data fragment (3) to be moved in the data buffer (6), if any;
i) once all row changes (12, 12') have been processed by the destination data server (4) and the data buffer (6) is empty, sequentially performing (180), by the distributed data manager (8), the following steps:
- configuring (181) the destination data server (4) to
generate, for each further row change (12") for the at least one row (9) of the data fragment (3) to be moved received from at least one client side (7), a new version of the row (9') according to the further row change (12"), wherein the new version of the row (9') has the same primary key (9.1') as the primary key (12.1") associated with the further row change (12") and wherein the commit timestamp (9.2') of the new version of the row (9') is the commit timestamp (12.2") associated with the further row change (12"), and
add the new version of the row (9') to the destination data fragment (5);
- configuring (182) all the at least one client side (7) to send read operations for the data fragment identified by the identifier (15) comprised in the data fragment movement command (11), only to the destination data server (4);
- once the previous step has been completed, configuring (183) all the at least one client side (7) to send the one or more further row changes (12") for the at least one row (9) of the data fragment identified by the identifier (15) comprised in the data fragment movement command (11); and
- once the previous step has been completed, removing (184), from the source data server (2), the data fragment (3) moved to the destination data server (4).

2. The method (100) according to claim 1 wherein the transactional distributed database system (1) carrying out the steps of the method (100) further comprises a dynamic reconfiguration manager (13) configured to provide the data fragment movement operation command (11) to the distributed data manager (8); and
wherein the data fragment movement operation command (11) received (110) by the distributed data manager (8) in step (a) of the method (100) is sent by the dynamic reconfiguration manager (13).

3. The method (100) according to claim 1, wherein the data fragment movement operation command (11) received (110) by the distributed data manager (8) in step (a) of the method (100) is sent by a database administrator (14).

4. The method (100) according to any of the previous claims, wherein the one or more row changes (12, 12', 12") comprise:
- a row insert operation; or
- a row deletion operation; or
- a row update operation; or
- a combination of at least two of the previous.

5. The method (100) according to the previous claim, wherein the row deletion operation requires to assign a tombstone value to the row.

6. The method (100) according to any of the previous claims, wherein the data fragment (3, 5) comprises a search tree as a data structure.

7. The method (100) according to the previous claim, wherein the search tree is of the type:
- B+ tree; or
- Log Structured Merge tree.

8. The method (100) according to any of the previous claims, wherein the step a) of the method comprises receiving further data fragment movement operation commands (11) for different data fragments (3), and wherein the steps b)-i) of the method for each data fragment movement operation command (11) received during the execution of one or more previous data fragment movement operation commands (11) are executed in parallel with the steps b)-i) of the method for said one or more previous data fragment movement operation commands (11).

9. The method (100) according to any of the previous claims, wherein the transactional distributed database system (1) carrying out the steps of the method (100) further comprises an inventory (10) connected to the distributed data manager (8) and wherein the method (100) further comprises:
- a previous step (101) of registering in the inventory (10), by the distributed data manager (8), that the data fragment movement operation is ongoing; and/or
- a sub-step (185) of the step i) of registering in the inventory (10), by the distributed data manager (8), that the data fragment movement operation is finished; and/or
- a step (102), concurrent to any of the steps of the method a)-j), of registering in the inventory (10) each step of the method that is being executed or that has been completed.

10. The method (100) according to claim 9, wherein the method (100) further comprises carrying out, by the distributed data manager (8), the following steps concurrently with the other steps of the method a)-i):
- registering in the inventory (10) an identification of the source data server (2); and/or
- registering in the inventory (10) an identification of the at least one destination data server (4); and/or
- registering in the inventory (10) how tables are split into data fragments (3, 5) and an identification of each data fragment (3, 5) and in which data server (2, 4) the data fragment (3, 5) is stored; and/or
- registering in the inventory (10) an identification of the at least one client side (7); and/or
- registering in the inventory (10) a list of the status of the at least one data fragment movement operation command (11) sent to the distributed data manager (8).

11. A transactional distributed database system (1) to perform at least one data fragment movement operation, the transactional distributed database system (1) being adapted to interact with at least one client side (7) and comprising a transactional manager and a distributed data manager (8) which, in turn, comprises at least two data servers (2, 4), wherein the distributed data manager (8) is adapted to:
o receive data fragment movement operation commands (11) to move data fragments (3); wherein each data fragment movement operation command (11) comprises a data fragment identifier (15), an identifier of the source data server (2) from which the data fragment (3) will be moved and an identifier of the destination data server (4) to which the data fragment (3) will be moved;
∘ upon receiving a data fragment movement operation command (11), identifying the data fragment (3) to be moved according to the data fragment identifier (5), and the source data server (2) and the destination data server (4) according to the identifier of the source data server and the identifier of the destination data fragment;
o execute the command of the movement of the data fragment (3) from the source data server (2) to the destination data server (4) using a data buffer (6) upon receiving the data fragment movement operation command (11); and
wherein the distributed data manager (8) is configured for carrying out the steps of the method (100) a)-d), f) and h)-i) according to any of the claims 1 to 8, the source data server (2) is configured for carrying out the step e) of the method (100) according to any of the claims 1-10, and the destination data server (4) is configured for carrying out the step g) of the method (100) according to any of the claims 1-10.

12. The transactional distributed database system (1) of claim 11 further comprising an inventory (10), wherein the at least one data manager (8) is further configured for carrying out the steps of the method (100) according to claims 9 to 10.

13. The transactional distributed database system (1) of any of claims 11-12 further comprising a dynamic reconfiguration manager (13) configured for sending, to the distributed data manager (8), the data fragment movement operation command (11).

14. A computer program product comprising instructions which, when the program is executed by a computer, cause the computer to carry out the steps of the method (100) of any of claims 1 to 10.

15. A computer-readable storage medium comprising instructions which, when executed by a computer, cause the computer to carry out the steps of the method (100) of any of claims 1 to 10.

## Patentansprüche

1. Computerimplementiertes Verfahren (100) zum Durchführen mindestens eines Datenfragmentbewegungsvorgangs in einem verteilten Transaktionsdatenbanksystem (1), das dazu angepasst ist, mit mindestens einer Client-Seite (7) zu interagieren,
wobei besagtes verteiltes Transaktionsdatenbanksystem (1) mindestens einen Transaktionsmanager und einen Manager für verteilte Daten (8) umfasst, wobei der Manager für verteilte Daten (8) mindestens zwei Datenserver (2, 4) umfasst; und wobei der Manager für verteilte Daten (8) zu Folgendem angepasst ist:
o Empfangen von Datenfragmentbewegungsvorgangsbefehlen (11) zum Bewegen von Datenfragmenten (3); wobei jeder Datenfragmentbewegungsvorgangsbefehl (11) eine Datenfragmentkennung (15), eine Kennung des Ursprungsdatenservers (16), von dem das Datenfragment (3) bewegt werden wird, und eine Kennung des Zieldatenservers (17), zu dem das Datenfragment (3) bewegt werden wird, umfasst;
∘ beim Empfangen eines Datenfragmentbewegungsvorgangsbefehls (11), Identifizieren des zu bewegenden Datenfragments (3) gemäß der Datenfragmentkennung (15) und des Ursprungsdatenservers (2) und des Zieldatenservers (4) gemäß der Kennung des Ursprungsdatenservers (16) und der Kennung des Zieldatenservers (17);
∘ Ausführen des Befehls der Bewegung des Datenfragments (3) vom Ursprungsdatenserver (2) zum Zieldatenserver (4) unter Verwendung eines Datenpuffers (6) beim Empfangen des Datenfragmentbewegungsvorgangsbefehls (11);
wobei das Datenfragment (3) mindestens eine Zeile (9) umfasst, wobei jede Zeile (9) durch einen Primärschlüssel (9.1) eindeutig identifiziert wird; und wobei jede Zeile (9) den Primärschlüssel (9.1), einen Commit-Zeitstempel (9.2) und optional mindestens einen assoziierten Wert (9.3) umfasst; und
wobei das Verfahren (100) die folgenden Schritte umfasst:
a) Empfangen (110), durch den Manager für verteilte Daten (8), eines Datenfragmentbewegungsvorgangsbefehls (11), der eine Datenfragmentkennung (15) und eine Kennung des Ursprungsdatenservers (16), von dem das Datenfragment (3) bewegt werden wird, und eine Kennung des Zieldatenservers (17), zu dem das Datenfragment (3) bewegt werden wird, umfasst;
b) Konfigurieren (120), durch den Manager für verteilte Daten (8), des Zieldatenservers (4), um in einem Datenpuffer (6) eine oder mehrere Zeilenänderungen (12) für die mindestens eine Zeile (9) des zu bewegenden Datenfragments (3) zu speichern, wobei besagte eine oder mehrere Zeilenänderungen (12) von mindestens einer Client-Seite (7) empfangen werden; wobei jede Zeilenänderung (12) unter allen Zeilenänderungen durch einen Primärschlüssel (12.1) identifiziert wird und einen assoziierten Commit-Zeitstempel (12.2) aufweist;
c) ferner Konfigurieren (121), durch den Manager für verteilte Daten (8), des Zieldatenservers (4), um darin (4) ein Zieldatenfragment (5) mit der gleichen Kennung (15) wie die Kennung des Datenfragments (3) zu erzeugen;
d) Konfigurieren (130), durch den Manager für verteilte Daten (8), der gesamten mindestens einen Client-Seite (7), um besagten gesamten mindestens einen Client-Seite (7) zu ermöglichen, die eine oder mehreren Zeilenänderungen (12) für die mindestens eine Zeile (9) des zu bewegenden Datenfragments (3) sowohl zum Ursprungsdatenserver (2) als auch zum Zieldatenserver (4) zu senden;
e) Durchführen (140), durch den Ursprungsdatenserver (2), der folgenden Teilschritte:
- Erzeugen (141), für jede Zeilenänderung (12), einer neuen Version der Zeile (9') gemäß der Zeilenänderung (12); wobei die neue Version der Zeile (9') den gleichen Primärschlüssel (9.1') wie der Primärschlüssel (12.1), der die Zeilenänderung (12) identifiziert, umfasst und wobei der Commit-Zeitstempel (9.2') der neuen Version der Zeile (9') der mit der Zeilenänderung (12) assoziierte Commit-Zeitstempel (12.2) ist, und
- Hinzufügen (142) der neuen Version der Zeile (9') zum zu bewegenden Datenfragment (3);
f) Konfigurieren (150), durch den Manager für verteilte Daten (8), des Ursprungsdatenservers (2), um die gesamte mindestens eine Zeile (9) des zu bewegenden Datenfragments (3) zum mindestens einen Zieldatenserver (4) zu senden;
g) sobald die gesamte mindestens eine Zeile (9) des Datenfragments (3) zum Zielserver (4) bewegt wurde, sequenzielles Verarbeiten (160), durch den Zielserver (4), der einen oder mehreren Zeilenänderungen (12), die im Datenpuffer (6) gespeichert sind, um:
- für jede Zeilenänderung (12) zu prüfen (161), ob es eine Zeile (9) in einem Zieldatenfragment (5) des Zieldatenservers (4) gibt, die einen Primärschlüssel (9.1) und einen Commit-Zeitstempel (9.2) umfasst, die gleich dem Primärschlüssel (12.1) sind, der die Zeilenänderung (12) und den mit der Zeilenänderung (12) assoziierten Commit-Zeitstempel (12.2) identifiziert;
- wenn ja, Verwerfen (162) der im Datenpuffer (6) gespeicherten Zeilenänderung (12); oder
- andernfalls:
Erzeugen (163) einer neuen Version der Zeile (9') gemäß der Zeilenänderung (12), wobei die neue Version der Zeile (9') den gleichen Primärschlüssel (9.1') wie der mit der Zeilenänderung (12) assoziierte Primärschlüssel (12.1) umfasst und wobei der Commit-Zeitstempel (9.2') der neuen Version der Zeile (9') der mit der Zeilenänderung (12) assoziierte Commit-Zeitstempel (12.2) ist, und
Hinzufügen (164) der neuen Version der Zeile (9') zum Zieldatenfragment (5);
h) gleichzeitig mit Schritt g), Konfigurieren (170), durch den Manager für verteilte Daten (8), des Zieldatenservers (4), um mindestens eine neue Zeilenänderung (12') für die mindestens eine Zeile (9) des zu bewegenden Datenfragments (3), falls vorhanden, im Datenpuffer (6) zu speichern;
i) sobald alle Zeilenänderungen (12, 12') vom Zieldatenserver (4) verarbeitet wurden und der Datenpuffer (6) leer ist, sequenzielles Durchführen (180), durch den Manager für verteilte Daten (8), der folgenden Schritte:
- Konfigurieren (181) des Zieldatenservers (4), um
für jede weitere Zeilenänderung (12") für die mindestens eine Zeile (9) des zu bewegenden Datenfragments (3), die von mindestens einer Client-Seite (7) empfangen wird, eine neue Version der Zeile (9') gemäß der weiteren Zeilenänderung (12") zu erzeugen, wobei die neue Version der Zeile (9') den gleichen Primärschlüssel (9.1') wie der mit der weiteren Zeilenänderung (12") assoziierte Primärschlüssel (12.1") aufweist und wobei der Commit-Zeitstempel (9.2') der neuen Version der Zeile (9') der mit der weiteren Zeilenänderung (12") assoziierte Commit-Zeitstempel (12.2") ist, und
Hinzufügen der neuen Version der Zeile (9') zum Zieldatenfragment (5);
- Konfigurieren (182) der gesamten mindestens einen Client-Seite (7), um Lesevorgänge für das Datenfragment, das durch die im Datenfragmentbewegungsbefehl (11) enthaltene Kennung (15) identifiziert wird, nur zum Zieldatenserver (4) zu senden;
- sobald der vorherige Schritt abgeschlossen wurde, Konfigurieren (183) der gesamten mindestens einen Client-Seite (7), um die eine oder mehreren weiteren Zeilenänderungen (12") für die mindestens eine Zeile (9) des Datenfragments, das durch die im Datenfragmentbewegungsbefehl (11) umfasste Kennung (15) identifiziert wird, zu senden; und
- sobald der vorherige Schritt abgeschlossen wurde, Entfernen (184), vom Ursprungsdatenserver (2), des zum Zieldatenserver (4) bewegten Datenfragments (3).

2. Verfahren (100) nach Anspruch 1, wobei das verteilte Transaktionsdatenbanksystem (1), das die Schritte des Verfahrens (100) ausführt, ferner einen dynamischen Rekonfigurationsmanager (13) umfasst, der konfiguriert ist, den Datenfragmentbewegungsvorgangsbefehl (11) dem Manager für verteilte Daten (8) bereitzustellen; und
wobei der Datenfragmentbewegungsvorgangsbefehl (11), der vom Manager für verteilte Daten (8) in Schritt (a) des Verfahrens (100) empfangen (110) wird, vom dynamischen Rekonfigurationsmanager (13) gesendet wird.

3. Verfahren (100) nach Anspruch 1, wobei der Datenfragmentbewegungsvorgangsbefehl (11), der vom Manager für verteilte Daten (8) in Schritt (a) des Verfahrens (100) empfangen (110) wird, von einem Datenbankadministrator (14) gesendet wird.

4. Verfahren (100) nach einem der vorhergehenden Ansprüche, wobei die eine oder mehreren Zeilenänderungen (12, 12', 12") umfassen:
- einen Zeileneinfügungsvorgang; oder
- einen Zeilenlöschvorgang; oder
- einen Zeilenaktualisierungsvorgang; oder
- eine Kombination von mindestens zwei der vorherigen.

5. Verfahren (100) nach dem vorherigen Anspruch, wobei der Zeilenlöschvorgang erfordert, der Zeile einen Tombstone-Wert zuzuweisen.

6. Verfahren (100) nach einem der vorhergehenden Ansprüche, wobei das Datenfragment (3, 5) einen Suchbaum als eine Datenstruktur umfasst.

7. Verfahren (100) nach dem vorherigen Anspruch, wobei der Suchbaum vom folgenden Typ ist:
- B+-Baum; oder
- Log Structured Merge-Baum.

8. Verfahren (100) nach einem der vorhergehenden Ansprüche, wobei der Schritt a) des Verfahrens das Empfangen weiterer Datenfragmentbewegungsvorgangsbefehle (11) für verschiedene Datenfragmente (3) umfasst, und wobei die Schritte b)-i) des Verfahrens für jeden Datenfragmentbewegungsvorgangsbefehl (11), der während der Ausführung eines oder mehrerer vorheriger Datenfragmentbewegungsvorgangsbefehle (11) empfangen wird, parallel zu den Schritten b)-i) des Verfahrens für besagten einen oder besagte mehrere vorherige Datenfragmentbewegungsvorgangsbefehl(e) (11) ausgeführt werden.

9. Verfahren (100) nach einem der vorhergehenden Ansprüche, wobei das verteilte Transaktionsdatenbanksystem (1), das die Schritte des Verfahrens (100) ausführt, ferner ein Inventar (10) umfasst, das mit dem Manager für verteilte Daten (8) verbunden ist, und wobei das Verfahren (100) ferner umfasst:
- einen vorherigen Schritt (101) des Registrierens im Inventar (10), durch den Manager für verteilte Daten (8), dass der Datenfragmentbewegungsvorgang am Laufen ist; und/oder
- einen Teilschritt (185) des Schritts i) des Registrierens im Inventar (10), durch den Manager für verteilte Daten (8), dass der Datenfragmentbewegungsvorgang beendet ist; und/oder
- einen Schritt (102), gleichzeitig mit einem der Schritte des Verfahrens a)-j), des Registrierens im Inventar (10) jedes Schritts des Verfahrens, der ausgeführt wird oder der abgeschlossen wurde.

10. Verfahren (100) nach Anspruch 9, wobei das Verfahren (100) ferner das Ausführen, durch den Manager für verteilte Daten (8), der folgenden Schritte gleichzeitig mit den anderen Schritten des Verfahrens a)-i) umfasst:
- Registrieren im Inventar (10) einer Identifikation des Ursprungsdatenservers (2); und/oder
- Registrieren im Inventar (10) einer Identifikation des mindestens einen Zieldatenservers (4); und/oder
- Registrieren im Inventar (10), wie Tabellen in Datenfragmente (3, 5) und eine Identifikation jedes Datenfragments (3, 5) aufgeteilt sind und in welchem Datenserver (2, 4) das Datenfragment (3, 5) gespeichert ist; und/oder
- Registrieren im Inventar (10) einer Identifikation der mindestens einen Client-Seite (7); und/oder
- Registrieren im Inventar (10) einer Liste des Status des mindestens einen Datenfragmentbewegungsvorgangsbefehls (11), der an den Manager für verteilte Daten (8) gesendet wird.

11. Verteiltes Transaktionsdatenbanksystem (1) zum Durchführen mindestens eines Datenfragmentbewegungsvorgangs, wobei das verteilte Transaktionsdatenbanksystem (1) angepasst ist, mit mindestens einer Client-Seite (7) zu interagieren, und einen Transaktionsmanager und einen Manager für verteilte Daten (8) umfasst, der wiederum mindestens zwei Datenserver (2, 4) umfasst, wobei der Manager für verteilte Daten (8) zu Folgendem angepasst ist:
∘ Empfangen von Datenfragmentbewegungsvorgangsbefehlen (11) zum Bewegen von Datenfragmenten (3); wobei jeder Datenfragmentbewegungsvorgangsbefehl (11) eine Datenfragmentkennung (15), eine Kennung des Ursprungsdatenservers (2), von dem das Datenfragment (3) bewegt werden wird, und eine Kennung des Zieldatenservers (4), zu dem das Datenfragment (3) bewegt werden wird, umfasst;
∘ beim Empfangen eines Datenfragmentbewegungsvorgangsbefehls (11), Identifizieren des zu bewegenden Datenfragments (3) gemäß der Datenfragmentkennung (5) und des Ursprungsdatenservers (2) und des Zieldatenservers (4) gemäß der Kennung des Ursprungsdatenservers und der Kennung des Zieldatenservers;
∘ Ausführen des Befehls der Bewegung des Datenfragments (3) vom Ursprungsdatenserver (2) zum Zieldatenserver (4) unter Verwendung eines Datenpuffers (6) beim Empfangen des Datenfragmentbewegungsvorgangsbefehls (11); und
wobei der Manager für verteilte Daten (8) zum Ausführen der Schritte des Verfahrens (100) a)-d), f) und h)-i) nach einem der Ansprüche 1 bis 8 konfiguriert ist, der Ursprungsdatenserver (2) zum Ausführen des Schritts e) des Verfahrens (100) nach einem der Ansprüche 1-10 konfiguriert ist und der Zieldatenserver (4) zum Ausführen des Schritts g) des Verfahrens (100) nach einem der Ansprüche 1-10 konfiguriert ist.

12. Verteiltes Transaktionsdatenbanksystem (1) nach Anspruch 11, ferner umfassend ein Inventar (10), wobei der mindestens eine Manager für Daten (8) ferner zum Ausführen der Schritte des Verfahrens (100) nach den Ansprüchen 9 bis 10 konfiguriert ist.

13. Verteiltes Transaktionsdatenbanksystem (1) nach einem der Ansprüche 11-12, ferner umfassend einen dynamischen Rekonfigurationsmanager (13), der zum Senden des Datenfragmentbewegungsvorgangsbefehls (11) zum Manager für verteilte Daten (8) konfiguriert ist.

14. Computerprogrammprodukt, umfassend Anweisungen, die, wenn das Programm von einem Computer ausgeführt wird, den Computer veranlassen, die Schritte des Verfahrens (100) nach einem der Ansprüche 1 bis 10 auszuführen.

15. Computerlesbares Speichermedium, umfassend Anweisungen, die, wenn sie von einem Computer ausgeführt werden, den Computer veranlassen, die Schritte des Verfahrens (100) nach einem der Ansprüche 1 bis 10 auszuführen.

## Revendications

1. Procédé mis en œuvre par ordinateur (100) pour réaliser au moins une opération de déplacement de fragment de données dans un système de base de données répartie transactionnelle (1) adapté pour interagir avec au moins un côté client (7),
dans lequel ledit système de base de données répartie transactionnelle (1) comprend au moins un gestionnaire transactionnel et un gestionnaire de données distribuées (8), le gestionnaire de données distribuées (8) comprenant au moins deux serveurs de données (2, 4), et dans lequel le gestionnaire de données distribuées (8) est adapté pour :
∘ recevoir des commandes d'opération de déplacement de fragment de données (11) pour déplacer des fragments de données (3), dans lequel chaque commande d'opération de déplacement de fragment de données (11) comprend un identifiant de fragment de données (15), un identifiant du serveur de données source (16) à partir duquel le fragment de données (3) sera déplacé et un identifiant du serveur de données de destination (17) vers lequel le fragment de données (3) sera déplacé,
∘ à réception d'une commande d'opération de déplacement de fragment de données (11), identifier le fragment de données (3) à déplacer en fonction de l'identifiant de fragment de données (15), et le serveur de données source (2) et le serveur de données de destination (4) en fonction de l'identifiant du serveur de données source (16) et de l'identifiant du serveur de données de destination (17),
∘ exécuter la commande du déplacement du fragment de données (3) du serveur de données source (2) au serveur de données de destination (4) en utilisant une mémoire tampon de données (6) à réception de la commande d'opération de déplacement de fragment de données (11),
dans lequel le fragment de données (3) comprend au moins une rangée (9), chaque rangée (9) étant identifiée de façon unique par une clé primaire (9.1), et chaque rangée (9) comprenant la clé primaire (9.1), un horodatage de validation (9.2), et facultativement au moins une valeur associée (9.3) ; et
dans lequel le procédé (100) comprend les étapes suivantes consistant à :
a) recevoir (110), par le gestionnaire de données distribuées (8), une commande d'opération de déplacement de fragment de données (11) comprenant un identifiant de fragment de données (15) et un identifiant du serveur de données source (16) à partir duquel le fragment de données (3) sera déplacé et un identifiant du serveur de données de destination (17) vers lequel le fragment de données (3) sera déplacé,
b) configurer (120), par le gestionnaire de données distribuées (8), le serveur de données de destination (4) pour stocker, dans une mémoire tampon de données (6), un ou plusieurs changements de rangée (12) pour la au moins une rangée (9) du fragment de données (3) à déplacer, ledit ou lesdits changements de rangée (12) étant reçus d'au moins un côté client (7), dans lequel chaque changement de rangée (12) parmi tous les changements de rangée est identifié par une clé primaire (12.1) et est associé à un horodatage de validation (12.2),
c) configurer (121) en outre, par le gestionnaire de données distribuées (8), le serveur de données de destination (4) pour créer dans celui-ci un fragment de données de destination (5) avec le même identifiant (15) que l'identifiant du fragment de données (3),
d) configurer (130), par le gestionnaire de données distribuées (8), la totalité du au moins un côté client (7) pour permettre à ladite totalité du au moins un côté client (7) d'envoyer le ou les changements de rangée (12) pour la au moins une rangée (9) du fragment de données (3) à déplacer à la fois vers le serveur de données source (2) et vers le serveur de données de destination (4),
e) réaliser (140), par le serveur de données source (2), les sous-étapes suivantes :
- générer (141), pour chaque changement de rangée (12), une nouvelle version de la rangée (9') en fonction du changement de rangée (12), dans lequel la nouvelle version de la rangée (9') comprend la même clé primaire (9.1) que la clé primaire (12.1) qui identifie le changement de rangée (12) et dans lequel l'horodatage de validation (9.2') de la nouvelle version de la rangée (9') est l'horodatage de validation (12.2) associée au changement de rangée, et
- ajouter (142) la nouvelle version de la rangée (9') au fragment de données (3) à déplacer,
f) configurer (150), par le gestionnaire de données distribuées (8), le serveur de données source (2) pour envoyer la totalité de la au moins une rangée (9) du fragment de données (3) à déplacer vers le au moins un serveur de données de destination (4),
g) une fois que la totalité de la au moins une rangée (9) du fragment de données (3) a été déplacée vers le serveur de destination (4), traiter séquentiellement (160), par le serveur de destination (4), le ou les changements de rangée (12) stockés dans la mémoire tampon de données (6) pour :
- vérifier (161), pour chaque changement de rangée (12), s'il y a une rangée (9) dans un fragment de données de destination (5) du serveur de données de destination (4) comprenant une clé primaire (9.1) et un horodatage de validation (9.2) qui sont égaux à la clé primaire (12.1) qui identifie le changement de rangée (12) et l'horodatage de validation (12.2) associé au changement de rangée (12),
- si tel est le cas, supprimer (162) le changement de rangée (12) stocké dans la mémoire tampon de données (6) ; ou
- sinon :
générer (163) une nouvelle version de la rangée (9') en fonction du changement de rangée (12), dans lequel la nouvelle version de la rangée (9') comprend la même clé primaire (9.1') que la clé primaire (12.1) associée au changement de rangée (12) et dans lequel l'horodatage de validation (9.2') de la nouvelle version de la rangée (9') est l'horodatage de validation (12.2) associé au changement de rangée (12), et
ajouter (164) la nouvelle version de la rangée (9') au fragment de données de destination (5),
h) simultanément à l'étape g), configurer (170), par le gestionnaire de données distribuées (8),le serveur de données de destination (4) pour stocker au moins un nouveau changement de rangée (12') pour la au moins une rangée (9) du fragment de données (3) à déplacer dans la mémoire tampon de données (6), le cas échéant,
i) une fois que tous les changements de rangée (12, 12') ont été traités par le serveur de données de destination (4) et que la mémoire tampon de données (6) est vide, réaliser (180) séquentiellement, par le gestionnaire de données distribuées (8) les étapes suivantes :
- configurer (181) le serveur de données de destination (4) pour
générer, pour chaque changement de rangée supplémentaire (12") pour la au moins une rangée (9) du fragment de données (3) à déplacer reçu d'au moins un côté client (7), une nouvelle version de la rangée (9') en fonction du changement de rangée supplémentaire (12"), dans lequel la nouvelle version de la rangée (9') a la même clé primaire (9,1') que la clé primaire (12.1") associée au changement de rangée supplémentaire (12") et dans lequel l'horodatage de validation (9.2') de la nouvelle version de la rangée (9') est l'horodatage de validation (12.2") associé au changement de rangée supplémentaire (12"), et
ajouter la nouvelle version de la rangée (9') au fragment de données de destination (5),
- configurer (182) la totalité du au moins un côté client (7) pour envoyer des opérations de lecture pour le fragment de données identifié par l'identifiant (15) compris dans la commande de déplacement de fragment de données (11), uniquement au serveur de données de destination (4),
- une fois que l'étape précédente est terminée, configurer (183) la totalité du au moins un côté client (7) pour envoyer le ou les changements de rangée supplémentaires (12") pour la au moins une rangée (9) du fragment de données identifié par l'identifiant (15) compris dans la commande de déplacement de fragment de données (11), et
- une fois que l'étape précédente est terminée, retirer (184), du serveur de données source (2), le fragment de données (3) déplacé vers le serveur de données de destination (4).

2. Procédé (100) selon la revendication 1, dans lequel le système de base de données répartie transactionnelle (1) réalisant les étapes du procédé (100) comprend en outre un gestionnaire de reconfiguration dynamique (13) configuré pour fournir la commande d'opération de déplacement de fragment de données (11) au gestionnaire de données distribuées (8), et
dans lequel la commande d'opération de déplacement de fragment de données (11) reçue (110) par le gestionnaire de données distribuées (8) à l'étape (a) du procédé (100) est envoyée par le gestionnaire de reconfiguration dynamique (13).

3. Procédé (100) selon la revendication 1, dans lequel la commande d'opération de déplacement de fragment de données (11) reçue (110) par le gestionnaire de données distribuées (8) à l'étape (a) du procédé (100) est envoyée par un administrateur de base de données (14).

4. Procédé (100) selon l'une quelconque des revendications précédentes, dans lequel le ou les changements de rangée (12, 12', 12") comprennent :
- une opération d'insertion de rangée, ou
- une opération de suppression de rangée, ou
- une opération de mise à jour de rangée; ou
- une combinaison d'au moins deux des opérations précédentes.

5. Procédé (100) selon la revendication précédente, dans lequel l'opération de suppression de rangée nécessite d'attribuer une valeur de marqueur de suppression à la rangée.

6. Procédé (100) selon l'une quelconque des revendications précédentes, dans lequel le fragment de données (3, 5) comprend un arbre de recherche en tant que structure de données.

7. Procédé (100) selon la revendication précédente, dans lequel l'arbre de recherche est du type :
- arbre B+, ou
- arbre de fusion structuré par journal.

8. Procédé (100) selon l'une quelconque des revendications précédentes, dans lequel l'étape a) du procédé comprend de recevoir des commandes d'opération de déplacement de fragment de données (11) supplémentaires pour différents fragments de données (3), et dans lequel les étapes b) à i) du procédé pour chaque commande d'opération de déplacement de fragment de données (11) reçue pendant l'exécution d'une ou plusieurs commandes d'opération de déplacement de fragment de données (11) précédentes sont exécutées parallèlement aux étapes b) à i) du procédé pour ladite ou lesdites commandes d'opération de mouvement de fragments de données (11) précédentes.

9. Procédé (100) selon l'une quelconque des revendications précédentes, dans lequel le système de base de données répartie transactionnelle (1) réalisant les étapes du procédé (100) comprend en outre un inventaire (10) connecté au gestionnaire de données distribuées (8) et dans lequel le procédé (100) comprend en outre :
- une étape préalable (101) consistant à enregistrer dans l'inventaire (10), par le gestionnaire de données distribuées (8), que l'opération de déplacement de fragment de données est en cours, et/ou
- une sous-étape (185) de l'étape i) consistant à enregistrer dans l'inventaire (10), par le gestionnaire de données distribuées (8), que l'opération de déplacement de fragment de données est terminée, et/ou
- une étape (102), simultanée à l'une quelconque des étapes a) à j) du procédé, consistant à enregistrer dans l'inventaire (10) chaque étape du procédé qui est en cours d'exécution ou qui est terminée.

10. Procédé (100) selon la revendication 9, dans lequel le procédé (100) comprend en outre de réaliser, par le gestionnaire de données distribuées (8), les étapes suivantes simultanément aux autres étapes a) à i) du procédé :
- enregistrer dans l'inventaire (10) une identification du serveur de données source (2), et/ou
- enregistrer dans l'inventaire (10) une identification du au moins un serveur de données de destination (4), et/ou
- enregistrer dans l'inventaire (10) la manière dont les tables sont scindées en fragments de données (3, 5) et une identification de chaque fragment de données (3, 5) et le serveur de données (2, 4) dans lequel le fragment de données (3, 5) est stocké, et/ou
- enregistrer dans l'inventaire (10) une identification du au moins un côté client (7), et/ou
- enregistrer dans l'inventaire (10) une liste de l'état de la au moins une commande d'opération de déplacement de fragment de données (11) envoyée au gestionnaire de données distribuées (8).

11. Système de base de données répartie transactionnelle (1) pour réaliser au moins une opération de déplacement de fragment de données, le système de base de données répartie transactionnelle (1) étant adapté pour interagir avec au moins un côté client (7) et comprenant un gestionnaire transactionnel et un gestionnaire de données distribuées (8) qui, à son tour, comprend au moins deux serveurs de données (2, 4), dans lequel le gestionnaire de données distribuées (8) est adapté pour :
∘ recevoir des commandes d'opération de déplacement de fragment de données (11) pour déplacer des fragments de données (3), dans lequel chaque commande d'opération de déplacement de fragment de données (11) comprend un identifiant de fragment de données (15), un identifiant du serveur de données source (2) à partir duquel le fragment de données (3) sera déplacé et un identifiant du serveur de données de destination (4) vers lequel le fragment de données (3) sera déplacé,
∘ à réception d'une commande d'opération de déplacement de fragment de données (11), identifier le fragment de données (3) à déplacer en fonction de l'identifiant de fragment de données (5), et le serveur de données source (2) et le serveur de données de destination (4) en fonction de l'identifiant du serveur de données source et de l'identifiant du fragment de données de destination,
∘ exécuter la commande du déplacement du fragment de données (3) du serveur de données source (2) au serveur de données de destination (4) en utilisant une mémoire tampon de données (6) à réception de la commande d'opération de déplacement de fragment de données (11), et
dans lequel le gestionnaire de données distribuées (8) est configuré pour réaliser les étapes a) à d), f) et h) à i) du procédé (100) selon l'une quelconque des revendications 1 à 8, le serveur de données source (2) est configuré pour réaliser l'étape e) du procédé (100) selon l'une quelconque des revendications 1 à 10, et le serveur de données de destination (4) est configuré pour réaliser l'étape g) du procédé (100) selon l'une quelconque des revendications 1 à 10.

12. Système de base de données répartie transactionnelle (1) selon la revendication 11, comprenant en outre un inventaire (10), dans lequel le au moins un gestionnaire de données (8) est en outre configuré pour réaliser les étapes du procédé (100) selon les revendications 9 à 10.

13. Système de base de données répartie transactionnelle (1) selon l'une quelconque des revendications 11-12, comprenant en outre un gestionnaire de reconfiguration dynamique (13) configuré pour envoyer, au gestionnaire de données distribuées (8), la commande d'opération de déplacement de fragment de données (11).

14. Produit de programme informatique comprenant des instructions qui, lorsque le programme est exécuté par un ordinateur, amènent l'ordinateur à réaliser les étapes du procédé (100) selon l'une quelconque des revendications 1 à 10.

15. Support de stockage lisible par ordinateur comprenant des instructions qui, lorsqu'elles sont exécutées par un ordinateur, amènent l'ordinateur à réaliser les étapes du procédé (100) selon l'une quelconque des revendications 1 à 10.
